# EUROPEAN PATENT SPECIFICATION

(11) **EP 3 150 926 B1**
(45) Date of publication and mention of the grant of the patent: **02.09.2020**
(21) Application number: 15397533.9
(22) Date of filing: 30.09.2015
(51) Int. Cl.: F24F 1/00, B63J 2/04, F24F 11/00, F24F 11/30, F24F 3/16, F24F 1/0007, F24F 11/77, F24F 11/83

(54) **A MARINE FAN COIL DEVICE AND SYSTEM**
MARINER VENTILATORKONVEKTORVORRICHTUNG UND SYSTEM
DISPOSITIF ET SYSTÈME DE BOBINE DE VENTILATEUR MARIN

(43) Date of publication of application: 05.04.2017
(73) Proprietor: Koja Oy, 33900 Tampere (FI)
(72) Inventor: JOKELAINEN, Janne, 33900 TAMPERE (FI); LÄHTEENMÄKI, Taru, 33900 TAMPERE (FI); NOUSIAINEN, Esko, 33900 TAMPERE (FI); KUMPULA, Markku, 33900 TAMPERE (FI); LEHTONEN, Mika, 33900 TAMPERE (FI)
(74) Representative: Berggren Oy, Tampere

(56) References cited:
- WO-A1-2015/075782
- KR-A- 20100 102 507
- US-A- 3 170 629
- US-A- 3 908 750
- US-A- 4 990 313
- US-A- 5 261 483
- US-B1- 6 245 293

## Description

### Technical field

The invention relates to fan coil devices suitable for marine and/or cabin use.

### Background

Marine fan coil devices are used for conditioning air in marine vehicles, such as ships, in particular the air of cabins in such vessels. Fan coil devices in general comprise a fan configured to circulate air and a coil configured to convey cooling medium in the coil, and also configured to cool said air circulating outside the coil. Typically fan coil devices comprise a control unit, which is configured to control at least the fan. The control unit typically comprises a user interface, such as buttons and/or potentiometers or similar turnable switches and/or display devices.

Since cabins are typically small, also the fan coil devices need to be small. Therefore, in typical fan coil devices, the control unit is arranged outside the covering of the fan coil device. Typically the control unit is attached to the covering. However, when attached onto the covering, the control unit is exposed to mechanical shocks during transportation and/or installation, because the control unit protrudes from the covering. In addition, such a projecting control unit may make the installation of the fan coil unit harder, as the space for the fan coil unit needs to accommodate also the control unit.

The fan coil device is configured to cool the cabin air by means of the coil. Therefore, the interior of the fan coil unit, during use, is typically cooler than the exterior of the fan coil unit. Moreover, in marine applications, the cabin air is typically humid. Thus, when the warm and humid air of the exterior contacts the covering of the fan cooler device, moisture may condense on the exterior. Thus, moisture may condense also on or in the control unit. This exposes the electronics of the control unit to oxidation, whereby the long term reliability of the control unit is reduced.

Document WO 2015/075782 discloses an air conditioner comprising a blower for generating an air flow from an first aspiration port and a second aspiration port to an air outlet. Air flows from the two aspiration ports are intermixed and blown by the blower to the air outlet.

### Summary

It has been observed that by locating the control unit in the interior of the covering of the fan coil device, these problems can be reduced or solved. The fan cooler device of claim 1 reduces these problems.

### Brief description of the drawings

- Fig. 1a: shows, in a perspective view, a fan coil device and an outer covering thereof,
- Fig. 1b: shows, in a front view, the fan coil device of Fig. 1a and components therein,
- Fig. 2a: shows, in a perspective view, a fan coil device and an outer covering thereof in an closed position,
- Fig. 2b: shows, in a perspective view, a fan coil device and an outer covering thereof in an open position,
- Fig. 2c: shows, in a perspective view, a modular inner structure of a fan coil device
- Fig. 3: shows schematically some parts of a primary control unit,
- Fig. 4a: shows a first control order of an arrangement of fan coil devices
- Fig. 4b: shows a second control order of an arrangement of fan coil devices
- Fig. 4c: shows a third control order of an arrangement of fan coil devices
- Fig. 4d: shows an arrangement of fan coil devices in connection with a central unit

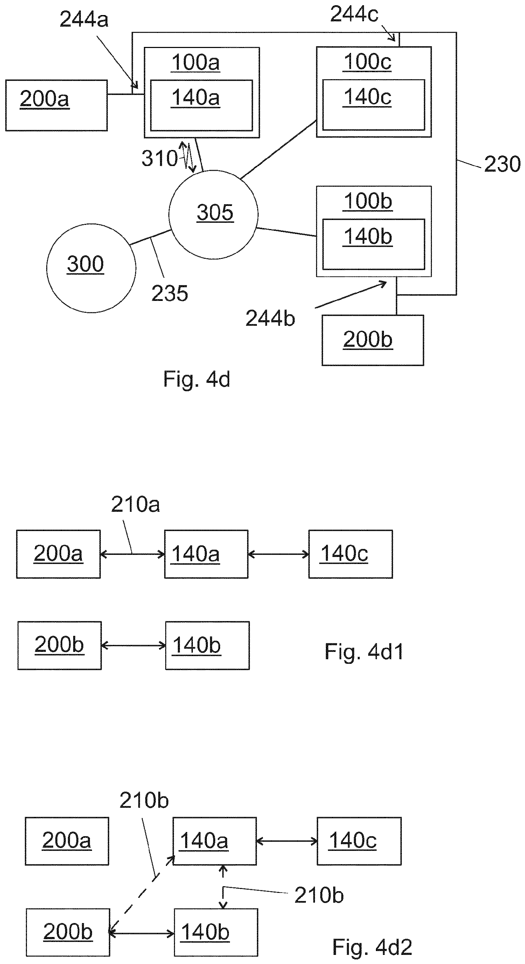

- Fig. 4d1: shows a control order of the arrangement of Fig. 4d at a first time
- Fig. 4d2: shows a control order of the arrangement of Fig. 4d at a second time, and

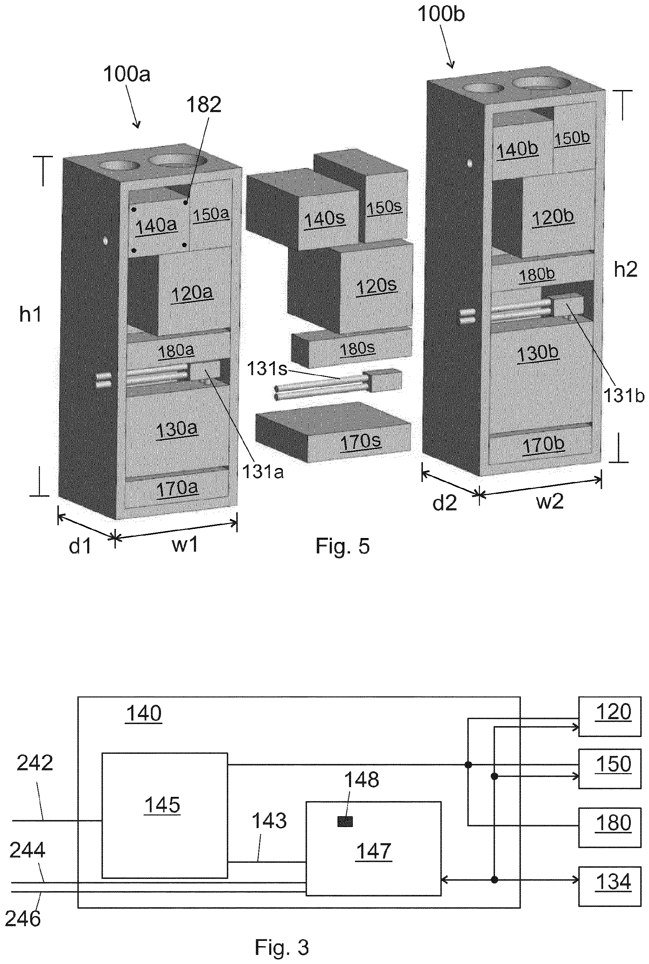

- Fig. 5: shows, in a perspective view, modular inner structures of two fan coil devices and spare parts for them.

### Detailed description

The embodiments of the invention , which is defined by the appended claims, relate to fan coil devices designed, in particular, for marine use. A marine fan coil unit differs in many ways from a similar unit used in buildings.

Cruise vessels are designed typically for several thousands of passengers. Inside air in the vessel must be at just right temperature and humidity levels no matter what climate zone the cruise vessel happens to be cruising through. Large amount of passengers, tropical climate conditions and very limited space for air conditioning equipment bring different challenges to marine air condition equipment compared with similar products used in buildings.

In marine environment, salt and humidity content in outside air is high and cause high risk of corrosion. Therefore, materials of marine fan coil units are better resistant to corrosion compared with units used only in buildings. Stainless steel and acid proof steel are often used materials.

In marine fan coil unit, a cooling coil will produce a lot of condensed water and it must be lead in a controlled manner into drains. Also air contains a large amount of water that condenses on also other cold surfaces. Therefore, a covering of a marine fan coil unit is typically thermally insulated, i.e. free from cold bridges. This helps to prevent unwanted condensation onto the fan coil unit.

Because of limited space and need of cooling capacity, air velocity through the fan coil unit is much larger than in fan coil units for buildings. A high rate of air exchange needs to take place in a limited space. Sound power level in passenger cabin must be still low and it means that a marine fan coil unit must be designed by minimizing noise levels of fan and other noise sources as well as minimizing pressure drop of the unit and ducts.

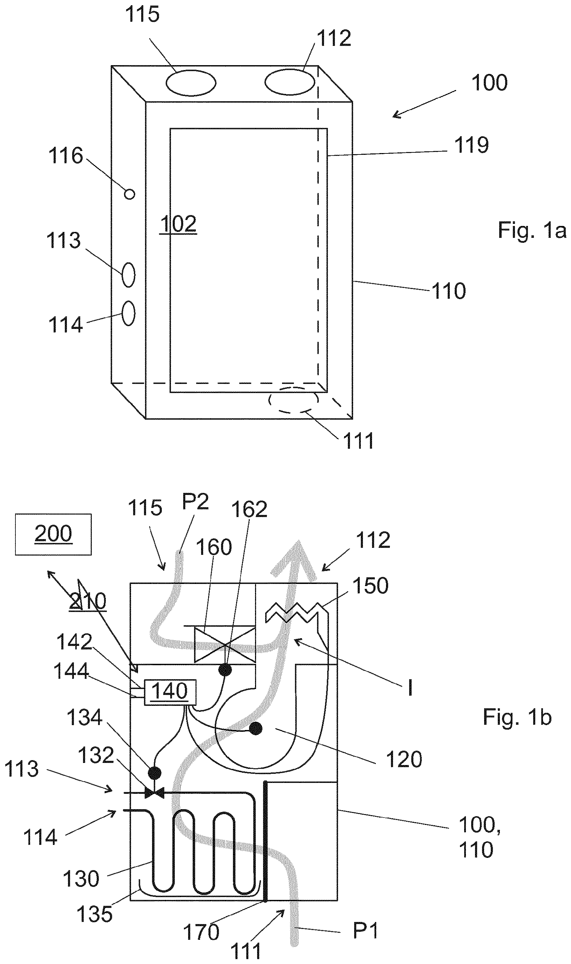

Figure 1a shows, in a perspective view, a fan coil device 100 for marine use and an outer covering 110 thereof. The outer covering 110 limits an interior 102 of the fan coil device 100. The outer covering 110 may comprise an openable lid 119, which is configured to be closed, when the fan coil device 100 is in use. The interior 102 is defined in the use condition of the device 100; wherein the lid 119 (if any) is closed. The fan coil device is suitable for marine use, such as for use on a ship. In particular, the fan coil device is suitable for use in a cabin of a ship. As discussed above, the suitability for such a use is evidenced by one or more of the following factors:
- the noise level produced by the fan coil when in use,
- the size of the fan coil device,
- the protection of electronics of the fan coil device,
- the type of electronic circuits used in the fan coil device,
- the selection of materials for the fan coil device and
- the way condensed moisture is handled.

Since the fan coil device 100 is designed for marine use, in an embodiment, the outer covering 110 comprises steel, such as stainless steel or acid proof steel. Moreover, because of the elimination of cold bridges, in an embodiment, the outer covering 110 comprises thermally insulating material. Thermally insulating material here refers to a material having a thermal conductivity less than 0.1 W/(m•K), preferably at most 0.06 W/(m•K), both values measured at the temperature 25 °C. Typical thermal insulators also have a thermal conductivity of at least 0.02 W/(m•K), measured at the temperature 25 °C. Preferably the outer covering 110, or at least a part of the outer covering 110, comprises a laminate structure having a layer of stainless material, such as plastic or stainless metal, such as steel (stainless or acid proof), and a layer of thermally insulating material in the aforementioned sense. These are arranged such that the thermally insulating material is in contact with the interior 102, and the metal layer is in between the exterior and the thermally insulating material. The metal layer may be finished, e.g. painted.

With reference to Fig. 1a, in an embodiment of the invention, the covering 110 comprises an inlet for cabin air 111, an outlet for air 112, an inlet for cooling medium 113, and an outlet for cooling medium 114. These inlets and outlets are used for bringing in to the fan coil device 100, or out therefrom, air and cooling medium. As for the covering 110, the inlet 113 and the outlet 114 for cooling medium may be arranged as a single hole through which two pipes are arranged.

With reference to Fig. 1b, the fan coil device 100 limits a first passage P1 configured to convey cabin air from the inlet for cabin air 111 to the outlet for air 112. The fan coil device 100 comprises a fan 120 and a coil 130. The fan 120 is configured circulate air through the first passage P1 from the inlet for cabin air 111 to the outlet for air 112. The coil 130 is configured to convey cooling medium from the inlet for cooling medium 113 to the outlet for cooling medium 114. The coil 130 is formed of a pipe, inside which the cooling medium can be conveyed. The cooling medium may comprise water. The coil 130 may be made of heat conductive material, such as metal, such as one of aluminum, copper, stainless steel, and acid proof steel. A heat conductive material refers to material having a thermal conductivity of at least 5 W/(m•K) or at least 10 W/(m•K), both at the temperature 25 °C. Copper and aluminum are preferred, as they conduct heat well. Thus, heat is easily conducted through the wall of the coil 130. As indicated in Fig. 1b, at least a part of the coil 130 is arranged on the first passage P1. The coil is configured to exchange heat between the heat transfer medium in the coil and the air out of the coil. In this way, the coil 130 is configured to cool the air circulated by the fan 120 through the first passage P1 by using said cooling medium. The temperature of the cooling medium is less than the temperature of the air circulated by the fan 120. This is achieved by an external cooling device. Typically a ship has a central cooling device for cooling the heat transfer medium.

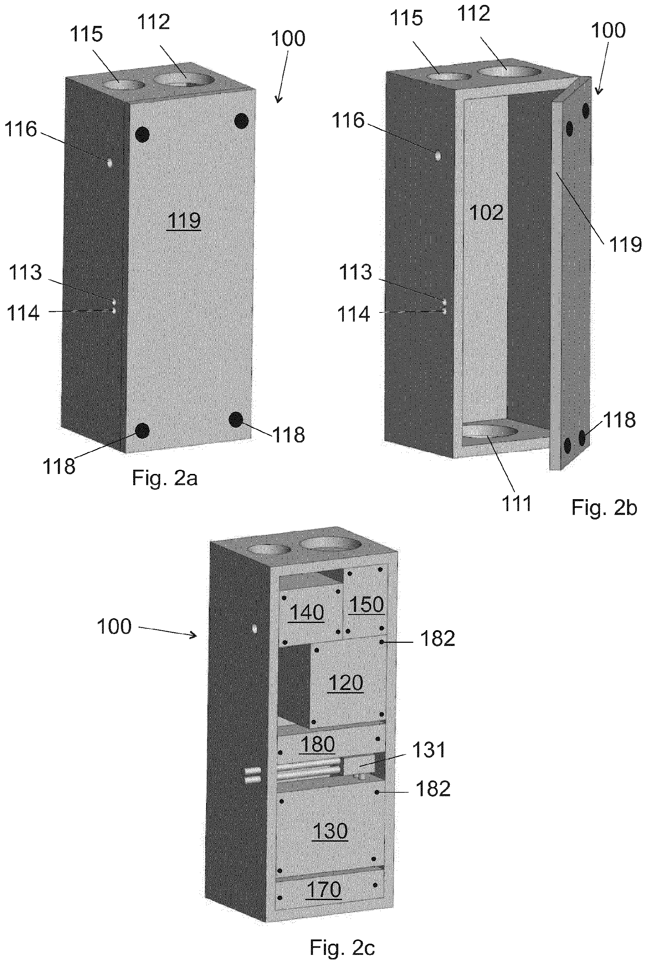

The fan 120 is arranged in the interior 102 of the fan coil device 100. At least part of the coil 130 is arranged in the interior 102 of the fan coil device 100. The heat transfer pipes of the coil 130 may extend through the inlet 113 and the outlet 114, to be connected to the rest of the circulation of the heat transfer medium. With reference to Fig. 2c, the fan coil device 100 may comprise a connector 131 configured to connect the coil 130 to the piping for the heat transfer medium.

In marine applications, cooling of the air often results in some moisture being condensed onto the coil 130 from the humidity of the cooled air. When large amounts of moisture condense on the coil 130, the condensate trickles off the coil 130 downwards. If not collected, such moisture may cause corrosion, malfunction of electronics, and/or traces of trickling on the walls of the cabin. Thus, an embodiment of the fan coil device 100 comprises means 135, such as a basin 135, configured to collect the condensate (i.e. water), and arranged below the coil 130. Moreover, the means 135 may comprise an outlet configured to receive a pipeline, whereby a pipeline can be used to convey the condensate into drains. Preferably, the inner surface of the basin 135 has a concave shape and the outlet for the pipeline is arranged at the bottom thereof. Thus, also preferably, the inner surface of the basin 135 is free from concave portions that could take in at least 50 ml of water and do not comprise an outlet, because such portions could serve as reservoirs for condensed water.

The cooling efficiency of the fan coil device 100 depends on the fan 120, the circulation in the coil 130, the material of the coil 130, and the temperature of heat transfer medium in the coil 130. However, typically only the first two can be easily controlled. The fan 120 may be an electrical fan. Thus, the control of the fan 120 may be done simple by controlling its operating voltage and/or current. To control the circulation of the cooling medium in the coil 130, the fan coil device comprises a valve 132 that can be used to limit the circulation. Moreover, the fan coil device comprises means 134, such as an actuator, e.g. an electric actuator, for controlling the first valve 132.

The fan coil device further comprises a primary control unit 140. The primary control unit 140 is configured to control at least one of the fan 120 and the means 134 for controlling the first valve 132. Thereby in effect the primary control unit 140 is configured to control the rate of air flow through the passage P1 and/or the rate of the flow of cooling medium in the coil 130.

In order to reduce the aforementioned problems, the primary control unit 140 is arranged in the interior 102 of the fan coil device 100. In particular, all parts of the primary control unit 140 are arranged in the interior 102 of the fan coil device 100. Thus, no parts of the primary control unit 140 is in contact with the surrounding air, which typically is humid, and the humidity of the exterior cannot condense on the primary control unit 140. As discussed above, in a preferred embodiment, the outer covering 110 comprises a layer of plastic or stainless metal, and a layer of thermal insulation on the inside of the layer of plastic or metal of the outer covering 110. In this embodiment, all parts of the primary control unit 140 are arranged in the interior 102 limited by the thermal insulation and the other layer. This reduces the temperature gradients on and in the primary control unit 140, whereby condensing of water does not occur at the primary control unit 140.

Furthermore, in an embodiment, the primary control unit 140 is arranged in such a location that the primary control unit 140 is in contact with air surrounding the primary control unit 140, and the air surrounding the primary control 140 unit has been dried. Thus, the primary control unit 140 may be arranged on the first passage P1, in the direction of air flow, after the coil 130. In the alternative, the primary control unit 140 may be arranged on the second passage P2, since the fresh air has been typically dried. Also preferably, the primary control unit 140 is arranged, in the direction of air flow, before the heater 150 (if any is used). This is to safeguard a low operating temperature for the primary control unit 140, which may increase the service life.

The primary control unit 140 is electrically operated. Thus, an embodiment comprises a wire 142 configured to transfer mains to the primary control unit 140. Since the primary control unit 140 is arranged in the interior 102, the primary control 140 unit does not necessarily comprise a user interface. In contrast, the primary control unit 140 is configured to receive a control signal 210 from a secondary control unit 200. The control signal 210 is indicative of, how the environmental parameters should be changed, whereby the primary control unit 140 can control the components of the fan coil unit correspondingly. In addition, the control signal 210 may be indicative of the identity of the sending unit 200, 140 (e.g. which one of multiple secondary control devices 200 is sending the signal). In addition or alternatively, the control signal 210 may be indicative of the identity of the receiving unit 140 (e.g. which one of multiple primary control devices 140 should react to the signal after having received it.)

The wire142 or another wire 144 may be used to transfer the signal 210 to the primary control unit 140. However, the signal 210 may be transferred wirelessly. Correspondingly, the outer covering 110 may limit an inlet 116 suitable for letting in the mains and/or other electric wires, such as wires to transfer the signal 210. The fan coil device may comprise a connector 242 for connecting the wire 142. The fan coil device may comprise another connector 244 for connecting the other wire 144, and a further connector 246 for connecting other wires. In an embodiment, the connectors are arranged in the inlet 116.

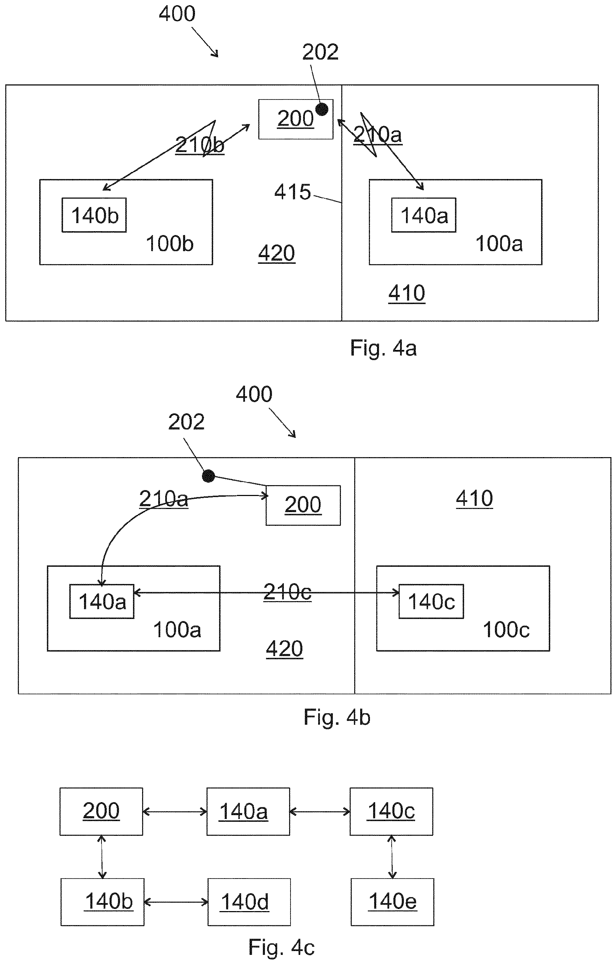

Since all parts of the primary control unit 140 may be arranged in the interior 102 of the covering 110, an embodiment of the fan coil device 100 does not comprise parts of a user interface apparatus on the outer surface of the covering 110. In an embodiment, the fan coil device 100 does not comprise user interface components, such as a display and/or a turnable switch, on the outer surface of the covering 110. Another controller may be used to control the device. Therefore, in an embodiment, the primary control unit 140 is configured to receive a control signal 210 from a secondary control unit 200. The control signal 210 may be e.g. a user-given control signal. Correspondingly the user can operate the secondary control unit 200. The secondary control unit may comprise parts for a user interface, such as a push button, a display, and/or a turnable switch. In addition, the secondary control unit 200 may also comprise a sensor 202 (Fig. 4a), such as one or more of a temperature sensor, a pressure sensor, a humidity sensor and a carbon dioxide (CO₂) sensor. Such a sensor is configured to provide information (or a signal) indicative of the environment of the secondary control unit. Alternatively or in addition, the secondary control unit 200 may be configured to receive a signal indicative of value of one or more of these quantities, e.g. from a sensor 202 (Fig. 4b). A simple user interface may have a button/buttons to increase and decrease e.g. temperature. In such a case, a temperature reading is not needed. However, more commonly, the user interface has a turnable switch (or push buttons) to indicate a target temperature, and the secondary control unit 200 or the primary control unit 140 is configured to receive information on both the target temperature and the actual temperature. Thus, the operation of the fan coil device 100 can be automated to optimize the actual temperature towards to target temperature. The same principle applies for humidity or carbon dioxide level.

For example, the primary control unit 140 may receive, with the signal 210, information indicative of the target temperature, and the fan coil device 100 may comprise a temperature sensor configured to sense the cabin air before cooling and/or heating the cabin air. Thus, the primary control unit 140 may optimize the temperature. Alternatively, the secondary control unit 200 may receive, from a user interface, information indicative of the target temperature, and receive, from a sensor 202 (see Figs 4a and 4b), information indicative of the current temperature. Thus the secondary control unit 200 may give indications, in the form of the signal 210, to the primary control unit 140 whether to increase or decrease the heating and/or cooling. Heating and cooling are done by the heater 150 and the coil 130, respectively, as evident to a skilled person. In an embodiment, the control unit is configured to control the temperature. In an embodiment, the control unit is configured to control the temperature and the humidity. In an embodiment, the control unit is configured to control the temperature and the carbon dioxide level. In an embodiment, the control unit is configured to control the temperature, the humidity, and the carbon dioxide level. As will become clear, the pressure may be controlled at the same time the carbon dioxide level is controlled and vice versa.

Moreover, the primary control unit 140, is configured to control the fan 120 and/or the means 134 for controlling the first valve 132 by using the control signal 210 received from the secondary control unit 200. In an embodiment further comprising a heater 150, the primary control unit 140 is configured to control also the heater 150. In an embodiment further comprising an air disinfecting device 180, the primary control unit 140 is configured to control also the air disinfecting device 180. For example, the air disinfecting device 180 may be set off when the fan 120 is not used; and be set on when the fan 120 is used.

Referring to Fig. 1b, in the embodiment of the invention according to claim 1, the outer covering 110 further limits an inlet for fresh air 115. Thus, the fan coil device 100 also limits a second passage P2 suitable for conveying air. The second passage P2 is configured to convey fresh air from the inlet for fresh air 115 to the outlet for air 112 or another outlet for air (not shown). The second passage P2 is used to regulate the content of carbon dioxide (CO₂) in the air. As indicated above, the temperature and the humidity of the air can be controlled also without any inlet of fresh air. However, in the long term, also fresh air is needed to reduce the CO₂ content to an acceptable level. Typically such fresh air has been conditioned, including drying, in a central air-conditioning device. Moreover, the pressure of the fresh air coming from such a device is typically so high that it can be conveyed through the second passage P2 without the fan 120 or another fan.

However, to control the use of fresh air, the fan coil device 100 of the embodiment comprises a second valve 160 configured to limit the inflow of fresh air into the fan coil device 100. Typically, the second valve 160 is preset to a fixed value depending on the estimated use of fresh air of people in a cabin. An estimate for the need of fresh-air of one person is around 7 l/s, such as from 7 l/s to 15 l/s. Therefore, for example, in a cabin for two persons, the second valve can be used to limit the fresh air flow to around 14 l/s or more, such as 21 l/s. In principle, the control unit 140 may be configured to control also some means 162 for controlling the second valve 160, thereby in effect controlling the inflow of fresh air into a cabin, and thus controlling the carbon dioxide level and the pressure of the cabin.

The second valve 160 is arranged at such a position that a slight overpressure (i.e. an overpressure of from e.g. 5 Pa to 30 Pa) remains in the cabin. Thus, opening a cabin door of window does not let humid air into the cabin.

The second passage P2 merges with the first passage P1 at an intersection I. Thus, also the second passage P2 is configured to convey fresh air to the same outlet for air 112, to which the passage P1 is configured to convey air. This has the technical effect of keeping the size of the fan coil device 100 small, since the number of outlets is reduced. Moreover, preferably, the intersection I is located, in the direction of flow of the air in the first passage P1, after the fan 120. This has the effect that the fan needs not to circulate also the fresh air coming from the inlet 115, which in effect, increases the service life of the fan 120. Moreover, since the fresh air may be cool, mixing fresh air with other air may result in condensing of moisture. When the intersection I is after the fan 120, the fan 120 is not exposed to such moisture.

Referring to Fig. 1 b, an embodiment of the fan coil device 100 comprises a heater 150, preferably an electric heater 150. The electric heater 150 may be configured to heat some resistive material when an electric current passes through said material. The heating effect of such an electric heater 150 is the result of such heating of the material. At least a part of the electric heater is arranged on the first passage P1. Thus the electric heater 150 is configured to heat the air circulated by the fan 120 through the first passage P1. Preferably, the primary control unit 140 is configured to control also the electric heater 150. Also preferably, the electric heater 150 is arranged, in the direction of flow of the air circulated by the fan 120, in between the fan 120 and the outlet for air 112. This has the effect that the fan 120 operates at a lower temperature, whereby its service life may be increased. This may have also other beneficial effects, as will be detailed later.

By using the fan 120 and at least one of the coil 130, and the heater 150, the fan coil device may be, at a time, configured to (i) only cool the air, (ii) only heat the air, or (iii) both cool and heat the air; the air referring to the air flowing through the passage P1. Cooling in general condenses some of the humidity of the air, as discussed above. Thus, in effect, by both cooling and heating the air, the air can be dried (and also cooled or heated in total, depending on the cooling and heating powers).

As indicated in Fig. 1b, in an embodiment wherein the fan coil device 100 comprises a heater 150, the heater 150 is arranged, in the direction of flow of the air in the first passage P1, in between the intersection I and the outlet for air 112. This location for the heater 150 maximizes the air flow around the heater, which improves the thermal transfer from the heater 150 to the air, and thus improves the efficiency.

An embodiment of the fan coil device 100 comprises a filter unit 170. The filter unit 170 is configured to filter the air circulated by the fan. The filter unit 170 is arranged in the passage P1. Preferably, the filter unit 170 is arranged, in the direction of flow of the air circulated by the fan 120, in between the inlet for cabin air 111 and the coil 130. In this way, the filter unit 170 helps to keep clean the other components of the fan coil device 100.

Referring to Figs. 2c and 5, an embodiment of the fan coil device 100 comprises an air disinfecting device 180. The air disinfecting device may comprise an optical air disinfecting device 180, such as an UV light source. An UV light source refers to a light source of which radiant intensity at least 80 % has a wavelength between 100 nm and 400 nm. The UV light source may be configured to emit light at least on the wavelengths from 100 nm to 300 nm. In an embodiment, the air disinfecting device 180 comprises an UV light source arranged inside a frame, such a metallic wire frame, and the UV light is configured to activate a photocatalyst of the frame. Thus, in an embodiment, the air disinfecting device is configured to disinfect air photocatalytically, i.e. by a photocatalysis process. In that embodiment, the frame comprises some photocatalyst. As an example, the frame may comprise semiconducting material, such as titanium oxide (TiO₂). Preferably, the photocatalyst comprises TiO₂ in the rutile or anatase form. It seems that anatase TiO₂ is a more effective photocatalyst than the rutile TiO₂. In addition, the frame may comprise an additive metal, such as at least one of Platinum (Pt), Chromium (Cr), Vanadium (V), Niobium (Nb), Iron (Fe), Silicon (Si), Phosphorous (P), Potassium (K), and Zinc (Zn). In particular, the frame may comprise titanium oxide (TiO₂) and at least one of Platinum (Pt), Chromium (Cr), and Vanadium (V). The frame may further comprise an absorbent layer configured to absorb moisture from air. The photocatalytic disinfection may occur on the frame of the air disinfecting device 180. Thus, the outer surface of the frame of the air disinfecting device 180 may be corrugated to increase surface area.

In an embodiment, also the air disinfecting device 180 is arranged in the interior 102 of the fan coil device 110. Preferably, the covering 110 is opaque for the light emitted by the air disinfecting device 180. In an embodiment, the primary control 140 unit is configured to control also the air disinfecting device 180. The air disinfecting device 180 is configured to disinfect the air circulated by the fan 120 through the first passage P1. Preferably, the air disinfecting device 180 is configured to disinfect the air at such a location that is arranged, in the direction of air flow through the first passage P1, in between the inlet for air cabin air 111 and the fan 120. This increases the service life of the fan 120. More preferably, when the device 100 comprises a filter unit 170, the air disinfecting device 180 is configured to disinfect the air at such a location that is arranged, in the direction of air flow through the first passage P1, in between the filter unit 170 and the fan 120. This has the effect that some impurities of the air are arrested by the filter unit 170, whereby a less powerful air disinfecting device 180 may suffice.

With reference to Fig. 3, in an embodiment, the primary control unit 140 comprises a power distribution part of a circuit board 145 and a primary control part of a circuit board 147. These parts 145, 147 may be arranged on the same board, or they may be separate boards. The power distribution circuit part 145 is configured to
- take in take the mains from a supply network via the wire 142. The mains may be e.g. 230 VAC (Volts, Alternating Current) mains,
- supply operating power, e.g. via the line 143, for the primary control part 147; the operating power being e.g. 24 VAC, and
- supply operating power for the fan 120, and, if used, for the heater 150 and optionally the air disinfecting device 180; as depicted in Fig. 3. The operating power of these may be e.g. 230 VAC.

Furthermore, the primary control unit 140, e.g. the circuitry of the primary control part 147, is configured to
- send control signals to the motor of the fan 120, the means 134 for controlling the flow within the coil 130, and, optionally also the heater 150 and/or the disinfecting device 180,
- optionally, form the aforementioned control signals, or only relay signals from the secondary control unit 200.
- receive feedback signal(s) from fan 120 motor rotation,
- receive different control signals (e.g. 210) and/or measurement values,
- optionally, relay these feedback and/or control signal to a secondary 200 and/or tertiary control unit 300, and
- stop heating using the heater 150, provided that the fan 120 is not running, since this might cause overheating.

In an embodiment, the fan coil device 100 comprises a connection 242 for the mains and a connection 244 for the secondary control unit 200. Both these connections 242, 244 may be physical connectors configured to receive a wire, such as pluggable connectors. Thus, a wire or a cable can be attached to the connector by plugging. The connectors 242, 244 may be water and dust proof according to the class IP44 (or higher) of the standard IEC 60529, referring to the latest version available on September 1st, 2015.

Hereinbelow, the term "bus" refers to a communication system that, in operation, transfers data between components, such as control units (300, 200, 140). The connection 244 for the secondary control unit 200 may be a connection to a first bus 230 (see Fig. 4d). The first bus 230 may be used, e.g. to receive control signals from a secondary control unit 200 and transmit control signals to a slave unit 140c (see Fig. 4b). The control signals may be transferred in a first bus 230 (see Fig. 4d) connected to the fan coil device 100 (or the fan coil devices 100b, 100b, 100c) with the connection 244 (or the connections 244a, 244b, 244c). In a preferred embodiment, the first bus 230 is used to transfer the signal 210 to the control unit 140. In a preferred embodiment, the connection 244 is a physical connector 244, and data in the first bus 230 is transferred via a wire attached to the connector 244.

As evident, the fan coil device 100 may be used with only one external control unit, such as the secondary control unit 200. However, in a preferred embodiment, the fan coil device 100 is configured to communicate with both the second control unit 200 and a tertiary control unit 300. In an embodiment, the fan coil device 100 is configured to communicate with the second control unit 200 via a first bus 230 and to communicate with a tertiary control unit 300 via a second bus 235 (Fig. 4d).

As will become clear, in an embodiment, the control unit 140 is configured to both receive a signal and send a signal via the first bus 230. Moreover, in an embodiment, the control unit 140 is configured to both receive a signal and send a signal via the second bus 235.

The fan coil device 100 may further comprise a connection 246 for a tertiary control unit 300. Another control signal 310 may be sent from the tertiary control unit 300 to a fan coil device (100a, 100b, 100c) e.g. via a network switch 305. The connection 246 may be e.g. an Ethernet connection 246. The connection 246 may comprise a suitable connector 246. The connection 246 for a tertiary control unit 300 may also be a pluggable connector 246. Thus, a wire or a cable can be attached to the connector 246 by plugging. The connection may be water and dust proof as discussed above for the connector 244. The connection 246 may be used to connect the control unit 140 to a cabin control system 300 (CCS). The tertiary control unit 300 may be connected to a fan coil device (or to fan coil devices) through a second bus 235. In a preferred embodiment, the second bus 235 is used to transfer the signal 310 to the control unit 140. In a preferred embodiment, the connection 246 is a physical connector 246, and data in the second bus 235 is transferred via a wire attached to the connector 246.

In an embodiment, the physical shape of the bus connector 244 for the secondary control unit 200 is different from the shape of the physical connector 246 for a tertiary control unit 300. This has the effect that the cables of the buses 230, 235 cannot be accidentally coupled to wrong connectors 244, 246.

Installing all electrical equipment inside the fan coil device 100 provides a small design with clear installation interfaces. Also external wiring is minimized, which reduces the risk of breaking the wiring during use and/or transport. This also provides testing the whole fan coil system before delivery to a customer.

Since the primary control unit 140 is configured to control the fan 120 and/or the means 134, and it 140 needs to be reasonable small in size, the primary control unit 140 comprises at least one integrated circuit 148 (Fig. 3). Because the device is configured to operate in marine applications, the integrated circuit 148, and preferably also other electronic components, is/are chosen from a class of circuits suitable for such a purpose. Moreover, the circuit is assembled onto a circuit board, such as the power distribution part 145 of a circuit board or the primary control part 147 of the same or another circuit board. The circuit board (or the boards) may be covered with suitable water-proof coating to improve the reliability of the electronics. The thickness and material of the water-proof coating are selected such that sufficient water-proofness is achieved for marine purposes.

In an embodiment, the primary control unit 140 comprises an electric component that has been classified as suitable for marine use by a recognized classification authority, such as DNV GL (i.e. the international classification society created as a result of a merger between Det Noske Veritas and Germanischer Lloyd) or its successor in title. In an embodiment, all the electric components of the primary control unit 140 have been classified as suitable for marine use by DNV GL or its successor in title.

The fan coil device 100 needs to be maintained from time to time. For maintaining the fan coil device 100, the fan coil device 100 comprises a lid 119, which is configured to be in an closed position (Fig. 2a) and an open position (Fig. 2b). In the open position, the components of the fan coil device 100 can be maintained. In the closed position, the lid 119 in its part, limits the interior 102 of the device 100, and thus protects the components arranged in the interior 102 (such as fan 120, coil 130, primary control unit 140 etc.) and improves the visual appearance of the fan coil device 100. To lock and open the lid 119, the fan coil device 100 comprises means 118 for locking the lid 119 to the closed position and means 118 for unlocking the lid 119 from the closed position. Such means 118 may comprise e.g. a turnable locking means, such as a screw and/or a bolt; or a clasp or a hook, or similar.

Referring to Fig. 2c, to ease the maintenance of the device 100, in an embodiment, at least one of the fan 120, the coil 130, and the primary control unit 140 is arranged to form a removable module. Typically, only one of the components is comprised by one such module. Thus, the fan 120 may form a first module; the coil 130 may form a second module; the primary control unit 140 may form a third module; the heater 150 may form a fourth module; the filter unit 170 may form a fifth module; the disinfecting device 180 may form a sixth module; and the connector 131 may form a seventh module. Preferably all these modules are removable modules. A removable module refers to a single entity that can be removed as a whole from the device without breaking the device, the module itself, or some fastening means 182 used to fix the module to the frame of the device. The fan coil device 100 may comprise openable fastening means 182 for fastening such a module to a frame of the fan coil device 100, such as to the covering 110. Such means 182 may comprise e.g. a screw, a clasp, or a hook. Referring further to Fig. 5, by opening the means 182 (not all of them shown in Fig. 5), a used module (e.g. 120a, 140a, 150a) can be removed from the fan coil device 100a. Thereafter, a new module (e.g. 120s, 140s, 150s, respectively) can be arranged in the place, from which the used module (e.g. 120a, 140a, 150a) has been removed. And finally, the new module (e.g. 120s, 140s, 150s) can be fastened to its position by fastening the means 182, e.g. the screws, the clasps, or the hooks.

Evidently also at least one of the electric heater 150 and the filter unit 170, and the air disinfecting device 180 may be configured to form a removable module in the aforementioned sense.

The signals 210, 310 between the control units (300, 200, 140) can be used in various ways to control the operation of one or more fan coil devices 100. In various embodiments, the primary control unit 140 is configured to receive a control signal 210 from a secondary control unit 200, and control at least one of (i) the fan 120 and (ii) the means 134 for controlling the first valve 132, by using the first control signal 210. Preferably, the tertiary control unit 300 can be used to parameterize the fan coil device 100, e.g. to set the identities of the master/slave units; and/or parameters for the optimization, i.e. how fast and harsh should the primary control unit 140 react to differences between the target and actual values of environment parameters, e.g. temperature. After such parameterization, the rest of the fan coil system, comprising the fan coil devices 100 and the secondary control units 200, can perform many functions also without a tertiary control unit 300. Such parameterization could also be made without a tertiary control unit 300, whereby such a unit 300 is not necessarily needed.

Considering first arrangements from the standpoint of only one fan coil device, referring to Fig. 4d, in an embodiment, the primary control unit 140 (the control unit 140a of Fig. 4d) is configured to receive a second control signal 310 from a tertiary control unit 300, such as a unit of a cabin control system. Herein the tertiary control unit 300 is not the same unit as the secondary control unit 200 (i.e. 200a). Moreover, the primary control unit 140 (i.e. 140a) is configured to control at least one of (i) the fan 120 and (ii) the means 134 for controlling the first valve 132, by using also the second control signal 310.

This has the effect, that the tertiary control unit 300 can be used to override the second control unit 200. For example, after a trip, the values for target temperature (or other environment parameter, e.g. humidity etc.) can be set to a default value using the tertiary control unit. In the alternative, the tertiary control unit may be used to override the values set by the secondary control unit 200, e.g. when the corresponding cabin is free from passengers. Thus, the system is easier to operate in an energy efficient manner.

The target values for the parameters may also be sent to a corresponding secondary control unit 200 (e.g. 200a). Therefore, in an embodiment, the primary control unit 140 is configured to (i) receive a first signal 310 from a tertiary control unit 300, the first signal being indicative of a target value for an environment parameter, (ii) form a second signal, the second signal being indicative of the same target value for the environment parameter as the first signal, and (iii) send the second signal to a secondary control unit 200a. As indicated above, preferably the fan coil device 100 comprises the connectors 244, 246 to which wires are attached, and via which the signals are transferred. Thus, the connectors 244, 246 are configured to relay the signals.

In addition or alternatively, the primary control unit 140 (e.g. 140a) of a fan coil device 100 (e.g. 100a) may be configured to form a signal (e.g. 310) indicative of the status of at least one of the fan 120, the valve 132 capable of limiting the flow within the coil 130, and the heater 150 of the fan coil device 100 (e.g. 100a); and send the signal (e.g. 310) to a tertiary control unit 300 e.g. via the second connector 246. This has the effect that the status of the fan coil device can be monitored in the tertiary control unit 300, such as a cabin control system. In addition or alternatively, the signal indicative of the state may be sent to the secondary control unit 200, preferably via the first connector 244. Such a signal may also include information indicative of the environment, such as temperature, pressure, humidity and/or CO₂ level.

In an embodiment, the secondary control unit 200 is configured to receive information indicative of an environment parameter, such as temperature, pressure, humidity and/or CO₂ level. The information may be indicative of the environment of the secondary control unit 200. The secondary control unit 200 may e.g. comprise a sensor 202 as discussed above (see Fig. 4a). In an embodiment, such information is transferred, via the buses 230 and 235 and a fan coil device 100 (e.g. 100a) to the tertiary control unit 300. In such an embodiment, the primary control unit 140 (e.g. 140a) is configured to receive a first signal (e.g. 210) from the secondary control unit 200, e.g. via the first connector 244, wherein the first signal is indicative of an environment. The primary control unit 140 (e.g. 140a) is further configured to form a second signal (e.g. 310), the second signal being indicative of the same environment as the first signal (e.g. 210). The primary control unit 140 (e.g. 140a) is further configured to send the second signal (e.g. 310) to a tertiary control unit 300, e.g. via the second connector 246. This has the effect, that even if the sensors are arranged in connection with the secondary control unit 200 (or units 200a, 200b), the sensor readings can be transferred to the tertiary (e.g. central) control unit 300. The readings are preferably transferred via at least one primary control unit 140 as discussed above. More preferably, the readings are preferably transferred via a bus, or more preferably via two buses (e.g. a first bus 230 and a second bus 235). Using a bus for signal transfer reduces the need for wiring. However, using two different buses for different purposes improves the flexibility of the system, since control signals of the second bus 235 can be used to override the control signals of the first bus 230.

Moreover, at least one secondary control unit 200 may be configured to receive information indicative of the position of a cabin door and/or the keycard switch. A keycard switch is used to indicated whether people actually are in the cabin or not. Based on this information, a secondary control unit 200 may be configured to operate a fan coil device 100 only when there is at least one person in the corresponding cabin. The keycard switch information and/or the information indicative of the position of the door may also be sent to other secondary units (e.g. 200b) via the first bus 230. In an arrangement, a secondary control unit is configured to receive information indicative of the position of a cabin door, information indicative of a position of a keycard switch, or both. Such information may be received from a corresponding sensor. Such information may be received from a cabin control system, such as the tertiary control unit 300. In an arrangement, a secondary control unit is configured to form and send a signal comprising information indicative of the position of a cabin door, information indicative of a position of a keycard switch, or both. Such a signal may be formed using the corresponding, received, information.

When a fan coil device 100 comprises a primary control unit 140 that is configured to receive signals from a secondary control unit 200, the control of systems with at least two, or multiple, such fan coil devices 100 becomes easy.

Considering next arrangements from the standpoint of at least two coil devices (100a, 100b), Fig. 4a shows an arrangement having a secondary control unit 200, a first fan coil device 100a and a second fan coil device 100b. As is evident, such a system may comprise further fan coil devices and further secondary control units (see, e.g. Figs. 4c and 4d). The primary control unit 140a of the first fan coil 100a may be called a first primary control unit 140a. Correspondingly, the primary control unit 140b of the second fan coil unit 100b may be called a second primary control unit 140b. Both the first primary control unit 140a and the second primary control unit 140b may be controlled with the same secondary control unit 200. In addition, they (140a and 140b) or at least one of them (140a, 140b) may be controlled with a tertiary control unit 300, such as a central control unit, for example a central unit of a cabin control system, as indicated above.

Referring to Fig. 4a, in an arrangement, the secondary control unit 200 works as a master unit for both the primary control units 140a, 140b; and both the primary control units 140a, 140b work as slave units for the secondary control unit 200. In this arrangement, the a secondary control unit 200 is configured to receive a user-given control signal, e.g. via a user interface. The secondary control unit 200 may comprise e.g. one or more of a push button, a display unit, and other user-interface components, as discussed above. In addition, the secondary control unit 200 may comprise a sensor 202 (Fig. 4a) or it may be configured to receive information from a sensor 202 (Fig. 4b), as discussed above.

Based on the user-given control signal, and optionally on a value of at least one environmental parameter (such as temperature, pressure, carbon dioxide content, humidity), the secondary control unit 200 is configured to form a first control signal 210a and a second control signal 210b; and send the first control signal 210a to the first primary control unit 140a and send the second control signal 210b to the second primary control unit 140b. When a bus connection, such as the bus connection 230 of Fig. 4d, is used, the second signal is sent to the second primary control unit 140b via the first primary control unit 140a. When the first primary control unit 140a receives the signal 210b,the first primary control unit 140a only transmits the signal 210b forward to the second primary control unit 140b. The signal (210a, 210b) may comprise information indicative of the receiving and/or sending unit, from which the primary control unit may determine how to react to the signal: use it to control the fan coil device, send it to another fan coil device, or both.

In this way, the user can easily control the environment for example in a multi-room cabin 400, in terms of at least one of temperature and humidity. For example the user may set the same target temperature for two different cabin rooms, and the secondary control unit 200 may individually control both the first fan coil device 100a arranged in a first cabin room 410 and the second fan coil device 100b arranged in a second cabin room 420. The secondary control unit 200 may be arranged in the first cabin room 410 or the second cabin room 420, or elsewhere. The signals 210a, 210b may be wireless signals or they may be transferred via a wire or wires. Preferably they a transferred via the first bus 230 and relayed via the connectors 244a, 244b for the secondary control unit 200 of the fan coil devices 100a, 100b (see Fig. 4d). As is evident, the first primary control unit 140a is configured to control at least one of the fan 120 and the means 134 for controlling the first valve 132 of the first fan coil device 100a; and the second primary control unit 140b is configured to control at least one of the fan 120 and the means 134 for controlling the first valve 132 of the second fan coil device 100b.

Referring to Fig. 4b, an embodiment of such a system comprises an arrangement having secondary control unit 200, a first fan coil device 100a and a second or a further fan coil unit 100c. As is evident, such a system may comprise further fan coil devices and further secondary control units. The primary control unit 140a of the first fan coil 100a may be called a first primary control unit 140a. Correspondingly, the primary control unit 140c of the second (or further) fan coil unit 100c may be called a second (or further) primary control unit 140c. Both the first primary control unit 140a and the second primary control unit 140c may be controlled with the same secondary control unit 200.

In the arrangement of Fig. 4b, the secondary control unit 200 works as a master unit for the first primary control unit 140a. The first primary control unit 140a works as a slave unit for the secondary control unit 200 and as a master unit for the second primary control unit 140c. The second primary control unit 140c works as a slave unit for the first primary control unit 140a. In this arrangement, the secondary control unit 200 is configured to receive a user-given control signal and optionally also information indicative of a value of an environment parameter. The secondary control unit 200 is configured the form a first control signal 210a using the user-given control signal (and optionally also information indicative of a value of an environment parameter) and send the first control signal 210a to the first primary control unit 140a. The first primary control unit 140a is configured to receive the first control signal 210a from the secondary control unit 200. Using the first control signal 210a, the first primary control unit 140a is configured to form a second control signal 210c. The first primary control unit 140a is also configured to send the second control signal 210c to the second primary control unit 140c. Still further, the second primary control unit 140c is configured to receive the second control signal 210c. As indicated above, the second primary control unit 140c is configured control the operation of the second fan coil unit 100c.

The second fan coil device 100c may receive, with the signal 210c, direct indications on how to change the air flor using the fan 120, the flow of heat transfer medium in the coil, and/or heating of the heater 150. In the alternative, the second fan coil device 100c may receive, with the signal 210c, target values for at least one environment parameter, and thereafter control the air flor using the fan 120, the flow of heat transfer medium in the coil, and/or heating of the heater 150 as indicated elsewhere.

As is evident, the first primary control unit 140a is configured to control at least one of the fan 120 and the means 134 for controlling the first valve 132 of the first fan coil device 100a; and the second primary control unit 140c is configured to control at least one of the fan 120 and the means 134 for controlling the first valve 132 of the second fan coil device 100c.

The system may comprise further fan coil devices operating as salve units to primary control units 140 of other fan coil devices 100, or as slaves directly to the secondary control unit 200. For example, Fig. 4c shows an arrangement having the primary control units 140a and 140b as slave units directly to the secondary control unit 200, as in the Figures 4a and 4b. The primary control units 140a and 140b operate as master units to the primary control units 140c (as in Fig. 4b) and 140d, respectively. Moreover, the primary control unit 140c operates as a master unit to the primary control unit 140e. As is evident, the primary control units 140a, 140b, 140c, 140d, 140e are comprised by corresponding fan coil devices (not shown), which may be arranged in same or different rooms (not shown).

Referring to Fig. 4d, in an embodiment, the primary control units (140a, 140b, 140c) and the secondary control units (200a, 200b) are connected to the same first bus 230. The first bus 230 may be used to transfer signals, such as the control signal 210, in between these devices. The primary control units 140 (i.e. 140a, 140b, or 140c) may act (i) as master units for some other primary control units/units 140 and/or (ii) as slave units to a secondary control unit 200 (i.e. 200a or 200b) or a another primary control unit 140.

Referring to Fig. 4d, in an embodiment, the primary control units (140a, 140b, 140c) and the tertiary control unit 300 are connected to the same second bus 235. The second bus 235 may be used to transfer signals in between these devices, such as a control signal 310 from the tertiary control unit 300 to the primary control units 140a, 140b, 140c. As indicated above, the control signals transferred in the second bus 235 may override the control signals transferred in the first bus 230.

In an embodiment, a central control unit 300 is used to change the control order of the fan coil device 100. The control order refers here to the order in which the secondary control units 200 and/or the primary control units 140 control each other in the aforementioned master/slave manner. As the primary control units 140 and the secondary control units 200 are connected to the same bus 230 (see Fig. 4d), control order may be stored e.g. in the receiving primary control unit 140, as information indicative of which control unit is the master unit for that particular control unit 140. In the alternative (or in addition), control order may be stored e.g. in the sending secondary 200 or primary control unit 140, as information indicative of which control unit or units is /are slave unit/units for that particular control unit 200, 140. Typically a control signal is indicative of the identity of the sending unit and the receiving unit. The particulars of where the control order is stored, and which control unit checks the control order, may be programmed to the various control units according to needs. The functioning of the fan 120, the coil 130, the heater 150, and/or the valve 162 is affected by target values of the environment parameters and the present values thereof, as discussed above.

Referring to Figs. 4d and 4d1, in an arrangement, and at a first instance of time, a primary control unit 140a may be configured to receive the control signal 210 directly from a first secondary control unit 200a. Thus, at the first instance of time, the primary control unit 140a is configured to be a slave unit for the first secondary control unit 200a. As indicated in Fig. 4d1, at that time, the primary control unit 140a is also configured to be a master unit for another primary control unit 140c. Moreover, at that time, the primary control unit 140a is configured to
- receive the control signal 210, wherein the control signal is indicative of an identity of a sending unit 200a,
- compare the identity of a sending unit 200a with a control order valid at the first instance of time,
- determine that the primary control unit 140a is a slave unit to the sending unit 200a, and
- control at least one of fan 120 and the means 134 for controlling the first valve 132 of the corresponding fan coil device 100a, by using the first control signal 210a of the first secondary control unit 200a.

It is also noted, that if the control signal 210 is indicative of an identity of another sending unit 200b that is not a master unit for the primary control unit 140a, the primary control unit 140a is configured to transmit the signal or a similar signal back to the first bus 230.

As indicated in Fig. 4d, the central control unit 300 is configured to send a control signal 310 to the primary control unit 140a. In an embodiment, such a signal 310 is indicative of a control order. Based on such a signal 310, the primary control unit 140a may infer, e.g. that the primary control unit 140a should thereafter, at a second instance of time, act as a slave unit to another control unit, such as another secondary control unit 200b or another primary control unit 140b, as indicated by the dotted lines in Fig. 4d2. As a result, the primary control unit is configured to change to control order stored in the primary control unit.

Then, at the second instance of time, the primary control unit 140a is configured to receive a control signal 210b directly from a second secondary control unit 200b, or another primary control unit 140b. Thus, at the second instance of time, the primary control unit 140a is configured to be a slave unit for the second secondary control unit 200a or the other primary control unit 140b. As indicated in Fig. 4d2, at that time, the primary control unit 140a is also configured to be a master unit for another primary control unit 140c. Moreover, at that time, the primary control unit 140a Moreover, at that time, the primary control unit 140a is configured to
- receive the control signal 210, wherein the control signal is indicative of an identity of another, different, sending unit 200b,
- compare the identity of the other sending unit 200b with a control order valid at the second instance of time,
- determine that the primary control unit 140a is a slave unit to the other sending unit 200b, and
- control at least one of fan 120 and the means 134 for controlling the first valve 132 of the corresponding fan coil device 100a, by using the first control signal 210a of the first secondary control unit 200a.

This has the technical effect that the control order of the underlying fan coil system can be easily changed. This enables the control the air of an arrangement of cabins (400, 410, 420) with only one or with at least two secondary control units. This is particularly feasible, if the arrangement of cabins 410, 420 can be united, e.g. be removal of a wall 415 (Fig. 4a) or walls, to a larger single cabin 400. Thus, the control of the air conditioning of the single cabin may be done is a more user friendly manner by using only one secondary control unit 200. Correspondingly, should the large cabin 400 be divided into smaller cabins 410, 420, e.g. by walls 415 or similar, each of the smaller cabins may have its own secondary control unit 200a, 200b. The operation of the fan coil unit or units can be configured by the central control unit 300 and by using the signal 310 indicative of control order (e.g. change of a control order or a new control order).

Even if not shown in Fig. 4d, the control order can, in the alternative, be stored in the secondary control units 200. Then, the when a user controls the fan coil device with a secondary control unit 200b, the secondary control unit 200b determines, from a control order, to which primary control unit 140b or units 140a, 140b it should send control signals. The primary control unit 140a or units 140a, 140b may or may not react to such signals. More specifically, in that embodiment, the primary control unit 140a is configured to
- receive the control signal 210, wherein the control signal is indicative of the identity of the receiving unit 140a (i.e. the primary control unit),
- determine, based on the control signal 210, that the primary control unit 140a is a slave unit for the unit that has sent the control signal 210, and
- control at least one of fan 120 and the means 134 for controlling the first valve 132 of the corresponding fan coil device 100a, by using the control signal 210.

It is also noted, that if the control signal 210 is indicative of an identity of another receiving unit 140b, the primary control unit 140a is configured to transmit the same or a similar signal back to the first bus 230 for the other receiving unit 140b to be received.

The cooling and/or heating effect of the fan coil device 100 may be controlled by the fan 120, the coil 130 and/or the heater 150. However, the maximum cooling and/or heating capacity is limited by the components and/or the temperature of the coolant circulating in the coil 130. Therefore, when manufacturing fan coil devices 100, the size and capacity of the components are selected according the maximum cooling and/or heating capacity needed. As is common, the larger capacity is needed, the bigger the components. Therefore, fan coil devices having a large cooling and/or heating capacity are in general bigger that fan coil devices having a small cooling and/or heating capacity.

However, and with reference to Fig. 5, it has been found that the transportation and installation of various fan coil devices 100a, 100b become easier, if only the height h1, h2 between the fan coil devices 100a, 100b of different capacity is varied in the manufacturing process. Correspondingly the other two dimensions, width w1, w2 and depth d1, d2, of various fan coil devices are preferably constant from one fan coil device 100a to another 100b. For example, in the embodiment of Fig. 4a, a more powerful fan coil device 100b may be needed in the larger room 420 than in the smaller room 410. Correspondingly, Fig. 5a shows an arrangement comprising a first fan coil device 100a having a first width w1, a first depth d1 and a first height h1, wherein the first height h1 is configured to be, in use, substantially vertical. Substantially vertical means that the direction of height is vertical or forms an angle of less than 30 degrees, or less than 10 degrees, with a vertical direction. Moreover, the arrangement comprises a second fan coil device 100b having a second width w2, a second depth d2 and a second height h2, wherein the second height h2 is configured to be, in use, substantially vertical. As indicated above, due to manufacturing and transportation reasons, preferably the first width w1 equals the second width w2 and the first depth d1 equals the second depth d2. Moreover, in case different maximum cooling/heating capacities are needed, the first height h1 is different from the second height h2, as indicated in Fig. 5. However, the fan coil devices 100a, 100b may also be identical in size.

With reference to Fig. 5, for a reasonable large range of maximum cooling capacities, the same modules can be used. That is to say, because the widths w1, w2 and depths d1, d2 are the same, the same module 140s can be used as a control unit for both the fan coil devices 100a and 100b, even if the fan coil units 100a, 100b have different heights (i.e. h1 is not equal to h2). Having the possibility of using same components (120, 140, 150, 170, 180) makes the maintenance easier, since it reduces the number of spare parts even if the fan coil device 100 are somewhat different. However, it is possible, that the same coil 130 is not sufficient for fan coil devices 100a, 100b of different size, but even the possibility of using partly the same modules (120s, 140s, 150s, 170s, 180s) in different fan coil devices (100a, 100b) makes the maintenance easier. Naturally, the modularity as discussed above and in Figs. 5 and 2c in itself also makes the maintenance easier.

In an embodiment, a marine vessel, such as a ship, comprises a fan coil device as discussed above. In an embodiment, the marine vessel comprises a cabin, and the fan coil device is arranged in the cabin. Furniture may also be arranged in the cabin. In an embodiment, the marine vessel further comprises a secondary control unit 200 as discussed above. In an embodiment, the marine vessel further comprises a tertiary control unit 300 as discussed above.

## Claims

1. A fan coil device (100) suitable for marine cabins, the fan coil device (100) comprising
- an outer covering (110) limiting an interior (102) of the fan coil device (100), the outer covering (110) having at least an inlet for cabin air (111), an outlet for air (112), an inlet for cooling medium (113), and an outlet for cooling medium (114), whereby the fan coil device (100) limits
- a first passage (P1) suitable for conveying cabin air from the inlet for cabin air (111) to the outlet for air (112), the fan coil device (100) comprising
- a fan (120)
• that is arranged in the interior (102) of the fan coil device (100) and
• that is configured to circulate air through the first passage (P1) from the inlet for cabin air (111) to the outlet for air (112),
- a coil (130),
• of which at least a part is arranged in the interior (102) of the fan coil device (100) and that is
• configured to convey cooling medium from the inlet for cooling medium (113) to the outlet for cooling medium (114), whereby
• the coil (130) is configured to cool the air circulated by the fan (120) through the first passage (P1) by using said cooling medium,
- a first valve (132) configured to limit circulation of the cooling medium in the coil (130) and means (134) for controlling the first valve (132), and
- a primary control unit (140),
• arranged in the interior (102) of the fan coil device (100),
• configured to receive a first control signal (210) from a secondary control unit (200), and
• configured to control, by using the first control signal (210),
∘ the fan (120),
∘ the means (134) for controlling the first valve (132), or
∘ the fan (120) and the means (134) for controlling the first valve (132), wherein
- the outer covering (110) further has an inlet for fresh air (115), whereby the fan coil device (100) is adapted to limit
- a second passage (P2) suitable for conveying fresh air from the inlet for fresh air (115) to the outlet for air (112) or to another outlet for air, the fan coil device (100) further comprising
- a second valve (160) configured to limit the inflow of fresh air into the fan coil device (100),
- the second passage (P2) merges with the first passage (P1) at an intersection (I), whereby the second passage (P2) is configured to convey fresh air from the inlet for fresh air (115) to the outlet for air (112), **characterized in that**
- the intersection (I) is located, in the direction of flow of the air in the first passage (P1), after the fan (120).

2. The fan coil device (100) of claim 1 comprising,
- an electric heater (150)
• arranged in the interior (102) of the fan coil device (100) and
• configured to heat the air circulated by the fan (120) through the first passage (P1), wherein
- the primary control unit (140) is configured to control also the electric heater (150);
preferably,
- the electric heater (150) is arranged, in the direction of flow of the air circulated by the fan (120), in between the fan (120) and the outlet for air (112).

3. The fan coil device (100) of claim 1, comprising
- an electric heater (150), wherein
- the electric heater (150) is arranged on the first passage (P1) and, in the direction of flow of the air in the first passage (P1), in between the intersection (I) and the outlet for air (112).

4. The fan coil device of any of the claims 1 to 3, comprising
- an air disinfecting device (180) for disinfecting the air circulated by the fan (120) through the first passage (P1);
preferably
- the primary control (140) unit is configured to control also the air disinfecting device (180).

5. The fan coil device of the claim 4, wherein
- the air disinfecting device (180) is arranged to disinfect air in between the inlet for cabin air (111) and the fan (120) in the direction of flow of the air circulated by the fan through the first passage (P1);
preferably
- the fan coil device comprises a filter unit (170) that is arranged, in the direction of flow of the air circulated by the fan, in between the inlet for cabin air (111) and the fan (120); and
- the air disinfecting device (180) is arranged to disinfect air in between the filter unit (170) and the fan (120) in the direction of flow of the air circulated by the fan through the first passage (P1);

6. The fan coil device (100) of any of the claims 1 to 5, comprising
- a lid (119) configured to be in an open position and a closed position, wherein in the open position, the components arranged in the interior (102) of the fan coil device (100) can be maintained, and
- means (118) for locking the lid (119) to the closed position and means (118) for unlocking the lid (119) from the closed position, wherein
- the fan (120), the coil (130), or the primary control unit (140) is arranged to form a removable module, wherein
- the fan coil device (100) comprises openable fastening means (182) that are configured to fasten the removable module comprising one of the fan (120), the coil (130), and the primary control unit (140) to the fan coil device (100), whereby
- the removable module is removable as a single unit from the fan coil device(100) by opening the openable fastening means (182), and
- another similar removable module can be fastened to the fan coil device (100) by closing the openable fastening means (182), whereby
- the fan (120), the coil (130), or the primary control unit (140) can be changed by opening and closing said openable fastening means (182).

7. The fan coil device (100) of any of the claims 1 to 6, wherein
- the primary control unit (140) is configured to
• receive a second control signal (310) from a tertiary control unit (300), and
• control at least one of (i) the fan (120) and (ii) the means (134) for controlling the first valve (132), by using also the second control signal (310);
preferably the fan coil device (100) comprises
- a first connector (244) configured to relay the first control signal (210) to the primary control unit (140) and
- a second connector (246) configured to relay the second control signal (310) to the primary control unit (140).

8. The fan coil device (100) of any of the claims 1 to 7, wherein
- the primary control unit (140) is configured to
• form a signal indicative of the status of at least one of the fan (120), the valve (132) capable of limiting the flow within the coil (130), and the heater (150), and
• send the signal to a another control unit (200, 300);
preferably the fan coil device (100) comprises
- a first connector (244) configured to relay the first control signal (210) from a secondary control unit (200) to the primary control unit (140), wherein
- the primary control unit (140) is configured to send the signal indicative of the status of at least one of the fan (120), the valve (132), and the heater (150) to
• a secondary control unit (200) via the first connector (244) or
• a tertiary control unit (300) via a second connector (246).

9. The fan coil device (100) of any of the claims 1 to 8, wherein
- the primary control unit (140) is configured to
• receive a first signal from another control unit (200, 300) via a bus (230, 235),
• form a second signal using the first signal, and
• send the second signal to a further control unit (300, 200) via another bus (235, 230);
preferably the fan coil device (100) comprises
- a connector (244, 246) configured relay the first signal from the other control unit (200, 300) to the primary control unit (140) and
- another connector (246, 244) configured to relay the second signal to the further control unit (300, 200), wherein
- the primary control unit (140) is configured to send the second signal to that one of the connectors (244, 246) that is different from the one of the connectors (246, 244) through which the first signal is received.

10. The fan coil device (100) of any of the claims 1 to 9, wherein
- the primary control unit (140) is configured to
• receive the first control signal (210a) from a first secondary control unit (200a), wherein the first control signal (210a) is indicative of an identity of the first secondary control unit (200a) and/or an identity of the primary control device (140),
• determining, by using the first control signal (210a) that the primary control unit (140) should react to the first control signal (210a),
• control, by using the first control signal (210a), at least one of the fan (120) and the means (134) for controlling the first valve (132),
• receive from a tertiary control unit (300) a signal (310) indicative of a control order,
• receive a second control signal (210b) from a second secondary control unit (200b), wherein the second control signal (210b) is indicative of an identity of the second secondary control unit (200b) and/or an identity of the primary control device (140),
• determining, by using the second control signal (210b) that the primary control unit (140) should react to the second control signal (210b),
• control, by using the second control signal (210b), at least one of the fan (120) and the means (134) for controlling the first valve (132);
optionally, at a time, primary control unit (140) is configured to
• receive another control signal from the first secondary control unit (200a), wherein the other control signal is indicative of an identity of the first secondary control unit (200a) and/or an identity of the primary control device (140),
• determining, by using the other control signal that the primary control unit (140), at that time, should not react to the first control signal (210a), and
• send the other control signal or a further control signal similar to the other control signal to another primary control unit.

11. An arrangement comprising
- a first fan coil device (100a) according to any of the claims 1 to 10, wherein the primary control unit (140a) of the first fan coil device (100a) is a first primary control unit (140a),
- a second fan coil device (100b, 100c) according to any of the claims 1 to 10, wherein the primary control unit (140b, 140c) of the second fan coil device (100b, 100c) is a second primary control unit (140b, 140c), and
- a secondary control unit (200) configured to control both the first primary control unit (140a) and the second primary control unit (140b, 140c); optionally, the arrangement further comprises
- a tertiary control unit (300) configured to control both the first primary control unit (140a) and the second primary control unit (140b, 140c).

12. The arrangement of claim 11, wherein
- the secondary control unit (200) is configured to
• receive a user-given control signal,
• form a first control signal (210a) and a second control signal (210b) using the user-given control signal,
• send the first control signal (210a) to the first primary control unit (140a), and
• send the second control signal (210b) to the second primary control unit (210b), whereby
- the primary control unit (140a) of the first fan coil device (100a) is configured to
• receive the first control signal (210a), and
• control, by using the first control signal (210a),
∘ the fan (120),
∘ the means (134) for controlling the first valve (132), or
∘ the fan (120) and the means (134) for controlling the first valve (132)
of the first fan coil device (100a), in which the first primary control unit (140a) is arranged and
- the primary control unit (140b) of the second fan coil device (100b) is configured to
• receive the second control signal (210b), and
• control, by using the second control signal (210b),
∘ the fan (120),
∘ the means (134) for controlling the first valve (132), or
∘ the fan (120) and the means (134) for controlling the first valve (132)
of the second fan coil device (100b), in which the second primary control unit (140b) is arranged.

13. The arrangement of claim 11 or 12, wherein
(A)
- the arrangement further comprises another fan coil device (100c) according to any of the claims 1 to 12 or
- the second fan coil device (100b) is the other fan coil device (100c), wherein
- the primary control unit (140c) of the other fan coil device (100c) is another primary control unit (140c), wherein
(B)
- the secondary control unit (200) is configured to
• receive a user-given control signal,
• form a first control signal (210a) using the user-given control signal, and
• send the first control signal (210a) to the first primary control unit (140a),
- the first primary control unit (140a) is configured to
• receive the first control signal (210a) from the secondary control unit (200),
• form another control signal (210c, 210b) using the first control signal (210a), and
• send the other control signal (210c, 210b) to the other primary control unit (140b, 140c), and
- the other primary control unit (140b, 140c) is configured
• to receive the other control signal (210b, 210c) and
• to control, by using the other control signal (210c, 210b),
∘ the fan (120),
∘ the means (134) for controlling the first valve (132), or
∘ the fan (120) and the means (134) for controlling the first valve (132)
of the other fan coil device (100c, 100b), in which the other primary control unit (140b, 140c) is arranged.

## Patentansprüche

1. Eine Gebläsekonvektorvorrichtung (100), die für Schiffskabinen geeignet ist, wobei die Gebläsekonvektorvorrichtung (100) Folgendes aufweist:
- eine äußere Abdeckung (110), die einen Innenraum (102) der Gebläsekonvektorvorrichtung (100) begrenzt, wobei die äußere Abdeckung (110) mindestens einen Einlass für Kabinenluft (111), einen Auslass für Luft (112), einen Einlass für Kühlmedium (113) und einen Auslass für Kühlmedium (114) aufweist, wodurch die Gebläsekonvektorvorrichtung (100) Folgendes begrenzt:
- einen ersten Durchgang (P1), der geeignet ist, Kabinenluft von dem Einlass für Kabinenluft (111) zum Auslass für Luft (112) zu befördern, wobei die Gebläsekonvektorvorrichtung (100) Folgendes aufweist:
- ein Gebläse (120),
• das im Innenraum (102) der Gebläsekonvektorvorrichtung (100) angeordnet ist und
• das konfiguriert ist, um Luft durch den ersten Durchgang (P1) vom Einlass für Kabinenluft (111) zum Auslass für Luft (112) umzuwälzen,
- eine Rohrschlange (130),
• von der zumindest ein Teil im Innenraum (102) der Gebläsekonvektorvorrichtung (100) angeordnet ist und die
• konfiguriert ist, um Kühlmedium vom Einlass für Kühlmedium (113) zum Auslass für Kühlmedium (114) zu befördern, wobei
• die Rohrschlange (130) konfiguriert ist, um die von dem Gebläse (120) durch den ersten Durchgang (P1) umgewälzte Luft unter Verwendung des genannten Kühlmediums zu kühlen,
- ein erstes Ventil (132), das konfiguriert ist, um die Umwälzung des Kühlmediums in der Rohrschlange (130) zu begrenzen, und Mittel (134) zum Steuern des ersten Ventils (132), und
- eine primäre Steuereinheit (140), die
• im Innenraum (102) der Gebläsekonvektorvorrichtung (100) angeordnet ist,
• konfiguriert ist, um ein erstes Steuersignal (210) von einer sekundären Steuereinheit (200) zu empfangen, und
• konfiguriert ist, um unter Verwendung des ersten Steuersignals (210) Folgendes zu steuern:
∘ das Gebläse (120),
∘ die Mittel (134) zum Steuern des ersten Ventils (132), oder
∘ das Gebläse (120) und die Mittel (134) zum Steuern des ersten Ventils (132), wobei
- die äußere Abdeckung (110) darüber hinaus einen Einlass für Frischluft (115) aufweist, wobei die Gebläsekonvektorvorrichtung (100) eingerichtet ist, um Folgendes zu begrenzen:
- einen zweiten Durchgang (P2), der geeignet ist, Frischluft vom Einlass für Frischluft (115) zum Auslass für Luft (112) oder zu einem anderen Auslass für Luft zu fördern, wobei die Gebläsekonvektorvorrichtung (100) darüber hinaus Folgendes aufweist:
- ein zweites Ventil (160), das konfiguriert ist, um das Einströmen von Frischluft in die Gebläsekonvektorvorrichtung (100) zu begrenzen,
- der zweite Durchgang (P2) sich an einem Schnittpunkt (I) mit dem ersten Durchgang (P1) vereinigt, wobei der zweite Durchgang (P2) konfiguriert ist, um Frischluft von dem Einlass für Frischluft (115) zu dem Auslass für Luft (112) zu befördern, **dadurch gekennzeichnet, dass**
- sich der Schnittpunkt (I) in der Strömungsrichtung der Luft im ersten Durchgang (P1) hinter dem Gebläse (120) befindet.

2. Gebläsekonvektorvorrichtung (100) gemäß Anspruch 1, welche Folgendes aufweist:
- eine elektrische Heizvorrichtung (150), die
• im Innenraum (102) der Gebläsekonvektorvorrichtung (100) angeordnet ist und
• konfiguriert ist, um die von dem Gebläse (120) durch den ersten Durchgang (P1) umgewälzte Luft zu erwärmen, wobei
- die primäre Steuereinheit (140) konfiguriert ist, um auch die elektrische Heizvorrichtung (150) zu steuern;
vorzugsweise,
- die elektrische Heizvorrichtung (150) in der Strömungsrichtung der von dem Gebläse (120) umgewälzten Luft zwischen dem Gebläse (120) und dem Auslass für Luft (112) angeordnet ist.

3. Gebläsekonvektorvorrichtung (100) gemäß Anspruch 1, welche Folgendes aufweist:
- eine elektrische Heizvorrichtung (150), wobei
- die elektrische Heizvorrichtung (150) an dem ersten Durchgang (P1) und in der Strömungsrichtung der Luft in dem ersten Durchgang (P1) zwischen dem Schnittpunkt (I) und dem Auslass für Luft (112) angeordnet ist.

4. Gebläsekonvektorvorrichtung gemäß einem der Ansprüche 1 bis 3, welche Folgendes aufweist:
- eine Luftdesinfektionsvorrichtung (180) zum Desinfizieren der vom Gebläse (120) durch den ersten Durchgang (P1) umgewälzten Luft;
vorzugsweise
die primäre Steuereinheit (140) konfiguriert ist, um auch die Luftdesinfektionsvorrichtung (180) zu steuern.

5. Gebläsekonvektorvorrichtung gemäß Anspruch 4, wobei
- die Luftdesinfektionsvorrichtung (180) angeordnet ist, um Luft zwischen dem Einlass für Kabinenluft (111) und dem Gebläse (120) in der Strömungsrichtung der vom Gebläse durch den ersten Durchgang (P1) umgewälzten Luft zu desinfizieren;
vorzugsweise
- die Gebläsekonvektorvorrichtung eine Filtereinheit (170) aufweist, die in der Strömungsrichtung der vom Gebläse umgewälzten Luft zwischen dem Einlass für Kabinenluft (111) und dem Gebläse (120) angeordnet ist; und
- die Luftdesinfektionsvorrichtung (180) angeordnet ist, um Luft zwischen der Filtereinheit (170) und dem Gebläse (120) in der Strömungsrichtung der von dem Gebläse durch den ersten Durchgang (P1) umgewälzten Luft zu desinfizieren.

6. Gebläsekonvektorvorrichtung (100) gemäß einem der Ansprüche 1 bis 5, welche Folgendes aufweist:
- einen Deckel (119), der so konfiguriert ist, dass er sich in einer offenen Position und einer geschlossenen Position befindet, wobei in der offenen Position die im Innenraum (102) der Gebläsekonvektorvorrichtung (100) angeordneten Komponenten beibehalten werden können, und
- Mittel (118) zum Verriegeln des Deckels (119) in der geschlossenen Position und Mittel (118) zum Entriegeln des Deckels (119) aus der geschlossenen Position, wobei
- das Gebläse (120), die Rohrschlange (130) oder die primäre Steuereinheit (140) angeordnet ist, um ein entfernbares Modul zu bilden, wobei
- die Gebläsekonvektorvorrichtung (100) öffenbare Befestigungsmittel (182) aufweist, die so konfiguriert sind, dass sie das entfernbare Modul, das eines von dem Gebläse (120), der Rohrschlange (130) und der primären Steuereinheit (140) aufweist, an der Gebläsekonvektorvorrichtung (100) befestigen, wobei
- das entfernbare Modul als eine einzelne Einheit aus der Gebläsekonvektorvorrichtung (100) durch Öffnen der öffenbaren Befestigungsmittel (182) entfernbar ist, und
- ein weiteres ähnliches, entfernbares Modul an der Gebläsekonvektorvorrichtung (100) durch Schließen der öffenbaren Befestigungsmittel (182) befestigt werden kann, wobei
- das Gebläse (120), die Rohrschlange (130) oder die primäre Steuereinheit (140) durch Öffnen und Schließen der öffenbaren Befestigungsmittel (182) ausgewechselt werden kann.

7. Gebläsekonvektorvorrichtung (100) gemäß einem der Ansprüche 1 bis 6, wobei
- die primäre Steuereinheit (140) konfiguriert ist, um
• ein zweites Steuersignal (310) von einer tertiären Steuereinheit (300) zu empfangen, und
• mindestens eines von (i) dem Gebläse (120) oder (ii) der Mittel (134) zum Steuern des ersten Ventils (132) zu steuern, wobei auch das zweite Steuersignal (310) verwendet wird;
vorzugsweise die Gebläsekonvektorvorrichtung (100) Folgendes aufweist:
- ein erstes Verbindungsstück (244), das konfiguriert ist, um das erste Steuersignal (210) an die primäre Steuereinheit (140) weiterzuleiten, und
- ein zweites Verbindungsstück (246), das konfiguriert ist, um das zweite Steuersignal (310) an die primäre Steuereinheit (140) weiterzuleiten.

8. Gebläsekonvektorvorrichtung (100) gemäß einem der Ansprüche 1 bis 7, wobei
- die primäre Steuereinheit (140) konfiguriert ist, um
• ein Signal zu bilden, das den Status von mindestens eines von dem Gebläse (120), dem Ventil (132), das in der Lage ist, die Strömung innerhalb der Rohrschlange (130) zu begrenzen, und der Heizvorrichtung (150) anzeigt, und
• das Signal an eine andere Steuereinheit (200, 300) zu senden;
vorzugsweise die Gebläsekonvektorvorrichtung (100) Folgendes aufweist:
- ein erstes Verbindungsstück (244), das konfiguriert ist, um das erste Steuersignal (210) von einer sekundären Steuereinheit (200) an die primäre Steuereinheit (140) weiterzuleiten, wobei
- die primäre Steuereinheit (140) konfiguriert ist, um das Signal, das den Status von mindestens eines von dem Gebläse (120), dem Ventil (132) und der Heizvorrichtung (150) anzeigt, an Folgendes zu senden:
• eine sekundäre Steuereinheit (200) über das erste Verbindungsstück (244) oder
• eine tertiäre Steuereinheit (300) über ein zweites Verbindungsstück (246).

9. Gebläsekonvektorvorrichtung (100) gemäß einem der Ansprüche 1 bis 8, wobei
- die primäre Steuereinheit (140) konfiguriert ist, um
• ein erstes Signal von einer anderen Steuereinheit (200, 300) über einen Bus (230, 235) zu empfangen,
• ein zweites Signal unter Verwendung des ersten Signals zu bilden, und
• das zweite Signal über einen anderen Bus (235, 230) an eine weitere Steuereinheit (300, 200) zu senden;
vorzugsweise die Gebläsekonvektorvorrichtung (100) Folgendes aufweist:
- ein Verbindungsstück (244, 246), das konfiguriert ist, um das erste Signal von der anderen Steuereinheit (200, 300) an die primäre Steuereinheit (140) weiterzuleiten und
- ein weiteres Verbindungsstück (246, 244), das konfiguriert ist, um das zweite Signal an die weitere Steuereinheit (300, 200) weiterzuleiten, wobei
- die primäre Steuereinheit (140) konfiguriert ist, um das zweite Signal an dasjenige der Verbindungsstücke (244, 246) zu senden, das sich von demjenigen der Verbindungsstücke (246, 244) unterscheidet, über das das erste Signal empfangen wird.

10. Gebläsekonvektorvorrichtung (100) gemäß einem der Ansprüche 1 bis 9, wobei
- die primäre Steuereinheit (140) konfiguriert ist, um
• das erste Steuersignal (210a) von einer ersten sekundären Steuereinheit (200a) zu empfangen, wobei das erste Steuersignal (210a) eine Identität der ersten sekundären Steuereinheit (200a) und/oder eine Identität der primären Steuervorrichtung (140) anzeigt,
• unter Verwendung des ersten Steuersignals (210a) zu bestimmen, dass die primäre Steuereinheit (140) auf das erste Steuersignal (210a) reagieren sollte,
• unter Verwendung des ersten Steuersignals (210a) mindestens eines von dem Gebläse (120) und der Mittel (134) zum Steuern des ersten Ventils (132) zu steuern,
• von einer tertiären Steuereinheit (300) ein Signal (310) zu erhalten, das einen Steuerbefehl anzeigt,
• ein zweites Steuersignal (210b) von einer zweiten sekundären Steuereinheit (200b) zu empfangen, wobei das zweite Steuersignal (210b) eine Identität der zweiten sekundären Steuereinheit (200b) und/oder eine Identität der primären Steuervorrichtung (140) anzeigt,
• unter Verwendung des zweiten Steuersignals (210b) zu bestimmen, dass die primäre Steuereinheit (140) auf das zweite Steuersignal (210b) reagieren sollte,
• unter Verwendung des zweiten Steuersignals (210b) mindestens eines von dem Gebläse (120) und den Mitteln (134) zum Steuern des ersten Ventils (132) zu steuern;
wobei optional die primäre Steuereinheit (140) jeweils konfiguriert ist, um
• ein anderes Steuersignal von der ersten sekundären Steuereinheit (200a) zu empfangen, wobei das andere Steuersignal eine Identität der ersten sekundären Steuereinheit (200a) und/oder eine Identität der primären Steuervorrichtung (140) anzeigt,
• unter Verwendung des anderen Steuersignals zu bestimmen, dass die primäre Steuereinheit (140) jeweils nicht auf das erste Steuersignal (210a) reagieren sollte, und
• das andere Steuersignal oder ein weiteres Steuersignal, das dem anderen Steuersignal ähnlich ist, an eine andere primäre Steuereinheit zu senden.

11. Eine Anordnung, die Folgendes aufweist:
- eine erste Gebläsekonvektorvorrichtung (100a) gemäß einem der Ansprüche 1 bis 10, wobei die primäre Steuereinheit (140a) der ersten Gebläsekonvektorvorrichtung (100a) eine erste primäre Steuereinheit (140a) ist,
- eine zweite Gebläsekonvektorvorrichtung (100b, 100c) gemäß einem der Ansprüche 1 bis 10, wobei die primäre Steuereinheit (140b, 140c) der zweiten Gebläsekonvektorvorrichtung (100b, 100c) eine zweite primäre Steuereinheit (140b, 140c) ist, und
- eine sekundäre Steuereinheit (200), die konfiguriert ist, um sowohl die erste primäre Steuereinheit (140a) als auch die zweite primäre Steuereinheit (140b, 140c) zu steuern;
wobei optional die Anordnung ferner Folgendes aufweist:
- eine tertiäre Steuereinheit (300), die konfiguriert ist, um sowohl die erste primäre Steuereinheit (140a) als auch die zweite primäre Steuereinheit (140b, 140c) zu steuern.

12. Anordnung gemäß Anspruch 11, wobei
- die sekundäre Steuereinheit (200) konfiguriert ist, um
• ein von einem Benutzer vorgegebenes Steuersignal zu erhalten,
• ein erstes Steuersignal (210a) und ein zweites Steuersignal (210b) unter Verwendung des vom Benutzer vorgegebenen Steuersignals zu bilden,
• das erste Steuersignal (210a) an die erste primäre Steuereinheit (140a) zu senden, und
• das zweite Steuersignal (210b) an die zweite primäre Steuereinheit (210b) zu senden, wobei
- die primäre Steuereinheit (140a) der ersten Gebläsekonvektorvorrichtung (100a) konfiguriert ist, um
• das erste Steuersignal (210a) zu empfangen, und
• unter Verwendung des ersten Steuersignals (210a) Folgendes zu steuern:
∘ das Gebläse (120),
∘ die Mittel (134) zum Steuern des ersten Ventils (132), oder
∘ das Gebläse (120) und die Mittel (134) zum Steuern des ersten Ventils (132) der ersten Gebläsekonvektorvorrichtung (100a), in der die erste primäre Steuereinheit (140a) angeordnet ist und
- die primäre Steuereinheit (140b) der zweiten Gebläsekonvektorvorrichtung (100b) konfiguriert ist, um
• das zweite Steuersignal (210b) zu empfangen, und
• unter Verwendung des zweiten Steuersignals (210b) Folgendes zu steuern:
∘ das Gebläse (120),
∘ die Mittel (134) zum Steuern des ersten Ventils (132), oder
∘ das Gebläse (120) und die Mittel (134) zum Steuern des ersten Ventils (132) der zweiten Gebläsekonvektorvorrichtung (100b), in der die zweite primäre Steuereinheit (140b) angeordnet ist.

13. Anordnung gemäß Anspruch 11 oder 12, wobei
(A)
- die Anordnung ferner eine weitere Gebläsekonvektorvorrichtung (100c) gemäß einem der Ansprüche 1 bis 12 aufweist oder
- die zweite Gebläsekonvektorvorrichtung (100b) die andere Gebläsekonvektorvorrichtung (100c) ist, wobei
- die primäre Steuereinheit (140c) der anderen Gebläsekonvektorvorrichtung (100c) eine andere primäre Steuereinheit (140c) ist, wobei
(B)
- die sekundäre Steuereinheit (200) konfiguriert ist, um
• ein von einem Benutzer vorgegebenes Steuersignal zu erhalten,
• ein erstes Steuersignal (210a) unter Verwendung des vom Benutzer vorgegebenen Steuersignals zu bilden, und
• das erste Steuersignal (210a) an die erste primäre Steuereinheit (140a) zu senden,
- die erste primäre Steuereinheit (140a) konfiguriert ist, um
• das erste Steuersignal (210a) von der sekundären Steuereinheit (200) zu empfangen,
• ein weiteres Steuersignal (210c, 210b) unter Verwendung des ersten Steuersignals (210a) zu bilden, und
• das andere Steuersignal (210c, 210b) an die andere primäre Steuereinheit (140b, 140c) zu senden, und
- die andere primäre Steuereinheit (140b, 140c) konfiguriert ist, um
• das andere Steuersignal (210b, 210c) zu empfangen und
• unter Verwendung des anderen Steuersignals (210c, 210b) Folgendes zu steuern:
∘ das Gebläse (120),
∘ die Mittel (134) zum Steuern des ersten Ventils (132), oder
∘ das Gebläse (120) und die Mittel (134) zum Steuern des ersten Ventils (132) der anderen Gebläsekonvektorvorrichtung (100c, 100b), in der die andere primäre Steuereinheit (140b, 140c) angeordnet ist.

## Revendications

1. Dispositif ventilo-convecteur (100) approprié pour des cabines de navire, le dispositif ventilo-convecteur (100) comprenant
- une couverture externe (110) limitant un intérieur (102) du dispositif ventilo-convecteur (100), la couverture externe (110) comportant au moins une entrée pour l'air de cabine (111), une sortie pour l'air (112), une entrée pour un fluide de refroidissement (113), et une sortie pour un fluide de refroidissement (114), le dispositif ventilo-convecteur (100) limitant
- un premier passage (P1) approprié pour acheminer l'air de cabine depuis l'entrée pour l'air de cabine (111) jusqu'à la sortie pour l'air (112), le dispositif ventilo-convecteur (100) comprenant
- un ventilateur (120)
• qui est agencé dans l'intérieur (102) du dispositif ventilo-convecteur (100) et
• qui est configuré pour faire circuler de l'air à travers le premier passage (P1) depuis l'entrée pour l'air de cabine (111) jusqu'à la sortie pour l'air (112),
- un serpentin (130),
• dont au moins une partie est agencée dans l'intérieur (102) du dispositif ventilo-convecteur (100) et qui est
• configuré pour acheminer un fluide de refroidissement depuis l'entrée pour un fluide de refroidissement (113) jusqu'à la sortie pour un fluide de refroidissement (114), dans lequel
• le serpentin (130) est configuré pour refroidir l'air mis en circulation par le ventilateur (120) à travers le premier passage (P1) à l'aide dudit fluide de refroidissement,
- une première vanne (132) configurée pour limiter une circulation du fluide de refroidissement dans le serpentin (130) et des moyens (134) pour commander la première vanne (132), et
- une unité de commande primaire (140),
• agencée dans l'intérieur (102) du dispositif ventilo-convecteur (100),
• configurée pour recevoir un premier signal de commande (210) depuis une unité de commande secondaire (200), et
• configurée pour commander, à l'aide du premier signal de commande (210),
∘ le ventilateur (120),
∘ les moyens (134) pour commander la première vanne (132), ou
∘ le ventilateur (120) et les moyens (134) pour commander la première vanne (132), dans lequel
- la couverture externe (110) possède en outre une entrée pour l'air de renouvellement (115), le dispositif ventilo-convecteur (100) étant adapté pour limiter
- un second passage (P2) approprié pour acheminer l'air de renouvellement depuis l'entrée pour l'air de renouvellement (115) jusqu'à la sortie pour l'air (112) ou jusqu'à une autre sortie pour l'air, le dispositif ventilo-convecteur (100) comprenant en outre
- une seconde vanne (160) configurée pour limiter le flux entrant d'air de renouvellement dans le dispositif ventilo-convecteur (100),
- le second passage (P2) fusionne avec le premier passage (P1) au niveau d'une intersection (I), le second passage (P2) étant configuré pour acheminer l'air de renouvellement depuis l'entrée pour l'air de renouvellement (115) jusqu'à la sortie pour l'air (112),
**caractérisé en ce que**
- l'intersection (I) est située, dans la direction de flux de l'air dans le premier passage (P1), après le ventilateur (120).

2. Dispositif ventilo-convecteur (100) selon la revendication 1, comprenant,
- un appareil de chauffage électrique (150)
• agencé dans l'intérieur (102) du dispositif ventilo-convecteur (100) et
• configuré pour chauffer l'air mis en circulation par le ventilateur (120) à travers le premier passage (P1), dans lequel
- l'unité de commande primaire (140) est configurée pour commander également l'appareil de chauffage électrique (150) ;
de préférence,
- l'appareil de chauffage électrique (150) est agencé, dans la direction de flux de l'air mis en circulation par le ventilateur (120), entre le ventilateur (120) et la sortie pour l'air (112).

3. Dispositif ventilo-convecteur (100) selon la revendication 1, comprenant
- un appareil de chauffage électrique (150), dans lequel
- l'appareil de chauffage électrique (150) est agencé sur le premier passage (P1) et, dans la direction de flux de l'air dans le premier passage (P1), entre l'intersection (I) et la sortie pour l'air (112).

4. Dispositif ventilo-convecteur selon l'une quelconque des revendications 1 à 3, comprenant
- un dispositif de désinfection d'air (180) pour désinfecter l'air mis en circulation par le ventilateur (120) à travers le premier passage (P1) ;
de préférence
- l'unité de commande primaire (140) est configurée pour commander également le dispositif de désinfection d'air (180).

5. Dispositif ventilo-convecteur selon la revendication 4, dans lequel
- le dispositif de désinfection d'air (180) est agencé pour désinfecter l'air entre l'entrée pour l'air de cabine (111) et le ventilateur (120) dans la direction de flux de l'air mis en circulation par le ventilateur à travers le premier passage (P1) ;
de préférence
- le dispositif ventilo-convecteur comprend une unité de filtre (170) qui est agencée, dans la direction de flux de l'air mis en circulation par le ventilateur, entre l'entrée pour l'air de cabine (111) et le ventilateur (120) ; et
- le dispositif de désinfection d'air (180) est agencé pour désinfecter l'air entre l'unité de filtre (170) et le ventilateur (120) dans la direction de flux de l'air mis en circulation par le ventilateur à travers le premier passage (P1).

6. Dispositif ventilo-convecteur (100) selon l'une quelconque des revendications 1 à 5, comprenant
- un couvercle (119) configuré pour être dans une position ouverte et une position fermée, dans lequel dans la position ouverte, les composants agencés dans l'intérieur (102) du dispositif ventilo-convecteur (100) peuvent être entretenus, et
- des moyens (118) pour verrouiller le couvercle (119) en position fermée et des moyens (118) pour déverrouiller le couvercle (119) de la position fermée, dans lequel
- le ventilateur (120), le serpentin (130) ou l'unité de commande primaire (140) est agencé pour former un module amovible, dans lequel
- le dispositif ventilo-convecteur (100) comprend des moyens de fixation ouvrables (182) qui sont configurés pour fixer le module amovible comprenant l'un du ventilateur (120), du serpentin (130), et de l'unité de commande primaire (140) sur le dispositif ventilo-convecteur (100), dans lequel
- le module amovible est amovible d'un seul tenant du dispositif ventilo-convecteur (100) par ouverture des moyens de fixation ouvrables (182), et
- un autre module amovible similaire peut être fixé sur le dispositif ventilo-convecteur (100) par fermeture des moyens de fixation ouvrables (182), dans lequel
- le ventilateur (120), le serpentin (130) ou l'unité de commande primaire (140) peut être modifié par ouverture et fermeture desdits moyens de fixation ouvrables (182).

7. Dispositif ventilo-convecteur (100) selon l'une quelconque des revendications 1 à 6, dans lequel
- l'unité de commande primaire (140) est configurée pour
• recevoir un second signal de commande (310) depuis une unité de commande tertiaire (300), et
• commander au moins l'un (i) du ventilateur (120) et (ii) des moyens (134) pour commander la première vanne (132), à l'aide également du second signal de commande (310) ;
le dispositif ventilo-convecteur (100) comprend de préférence
- un premier connecteur (244) configuré pour relayer le premier signal de commande (210) vers l'unité de commande primaire (140) et
- un second connecteur (246) configuré pour relayer le second signal de commande (310) vers l'unité de commande primaire (140).

8. Dispositif ventilo-convecteur (100) selon l'une quelconque des revendications 1 à 7, dans lequel
- l'unité de commande primaire (140) est configurée pour
• former un signal indicatif de l'état d'au moins l'un du ventilateur (120), de la vanne (132) capable de limiter le flux au sein du serpentin (130), et de l'appareil de chauffage (150), et
• envoyer le signal à une autre unité de commande (200, 300) ;
le dispositif ventilo-convecteur (100) comprend de préférence
- un premier connecteur (244) configuré pour relayer le premier signal de commande (210) depuis une unité de commande secondaire (200) vers l'unité de commande primaire (140), dans lequel
- l'unité de commande primaire (140) est configurée pour envoyer le signal indicatif de l'état d'au moins l'un du ventilateur (120), de la vanne (132), et de l'appareil de chauffage (150) à
• une unité de commande secondaire (200) via le premier connecteur (244) ou
• une unité de commande tertiaire (300) via un second connecteur (246).

9. Dispositif ventilo-convecteur (100) selon l'une quelconque des revendications 1 à 8, dans lequel
- l'unité de commande primaire (140) est configurée pour
• recevoir un premier signal depuis une autre unité de commande (200, 300) via un bus (230, 235),
• former un second signal à l'aide du premier signal, et
• envoyer le second signal à une unité de commande supplémentaire (300, 200) via un autre bus (235, 230) ;
le dispositif ventilo-convecteur (100) comprend de préférence
- un connecteur (244, 246) configuré pour relayer le premier signal depuis l'autre unité de commande (200, 300) vers l'unité de commande primaire (140) et
- un autre connecteur (246, 244) configuré pour relayer le second signal vers l'unité de commande supplémentaire (300, 200), dans lequel
- l'unité de commande primaire (140) est configurée pour envoyer le second signal à celui des connecteurs (244, 246) qui est différent de l'un des connecteurs (246, 244) par l'intermédiaire duquel le premier signal est reçu.

10. Dispositif ventilo-convecteur (100) selon l'une quelconque des revendications 1 à 9, dans lequel
- l'unité de commande primaire (140) est configurée pour
• recevoir le premier signal de commande (210a) depuis une première unité de commande secondaire (200a), dans lequel le premier signal de commande (210a) est indicatif d'une identité de la première unité de commande secondaire (200a) et/ou d'une identité du dispositif de commande primaire (140),
• déterminer, à l'aide du premier signal de commande (210a) que l'unité de commande primaire (140) doit réagir au premier signal de commande (210a),
• commander, à l'aide du premier signal de commande (210a), au moins l'un du ventilateur (120) et des moyens (134) pour commander la première vanne (132),
• recevoir depuis une unité de commande tertiaire (300) un signal (310) indicatif d'un ordre de commande,
• recevoir un second signal de commande (210b) depuis une seconde unité de commande secondaire (200b), dans lequel le second signal de commande (210b) est indicatif d'une identité de la seconde unité de commande secondaire (200b) et/ou d'une identité du dispositif de commande primaire (140),
• déterminer, à l'aide du second signal de commande (210b) que l'unité de commande primaire (140) doit réagir au second signal de commande (210b),
• commander, à l'aide du second signal de commande (210b), au moins l'un du ventilateur (120) et des moyens (134) pour commander la première vanne (132) ;
éventuellement, à un moment, l'unité de commande primaire (140) est configurée pour
• recevoir un autre signal de commande depuis la première unité de commande secondaire (200a), dans lequel l'autre signal de commande est indicatif d'une identité de la première unité de commande secondaire (200a) et/ou d'une identité du dispositif de commande primaire (140),
• déterminer, à l'aide de l'autre signal de commande que l'unité de commande primaire (140), à un moment, ne doit pas réagir au premier signal de commande (210a), et
• envoyer l'autre signal de commande ou un signal de commande supplémentaire similaire à l'autre signal de commande à une autre unité de commande primaire.

11. Agencement comprenant
- un premier dispositif ventilo-convecteur (100a) selon l'une quelconque des revendications 1 à 10, dans lequel l'unité de commande primaire (140a) du premier dispositif ventilo-convecteur (100a) est une première unité de commande primaire (140a),
- un second dispositif ventilo-convecteur (100b, 100c) selon l'une quelconque des revendications 1 à 10, dans lequel l'unité de commande primaire (140b, 140c) du second dispositif ventilo-convecteur (100b, 100c) est une seconde unité de commande primaire (140b, 140c), et
- une unité de commande secondaire (200) configurée pour commander à la fois la première unité de commande primaire (140a) et la seconde unité de commande primaire (140b, 140c) ;
éventuellement, l'agencement comprend en outre
- une unité de commande tertiaire (300) configurée pour commander à la fois la première unité de commande primaire (140a) et la seconde unité de commande primaire (140b, 140c).

12. Agencement selon la revendication 11, dans lequel
- l'unité de commande secondaire (200) est configurée pour
• recevoir un signal de commande donné par l'utilisateur,
• former un premier signal de commande (210a) et un second signal de commande (210b) à l'aide du signal de commande donné par l'utilisateur,
• envoyer le premier signal de commande (210a) à la première unité de commande primaire (140a), et
• envoyer le second signal de commande (210b) à la seconde unité de commande primaire (210b), dans lequel
- l'unité de commande primaire (140a) du premier dispositif ventilo-convecteur (100a) est configurée pour
• recevoir le premier signal de commande (210a), et
• commander, à l'aide du premier signal de commande (210a),
∘ le ventilateur (120),
∘ les moyens (134) pour commander la première vanne (132), ou
∘ le ventilateur (120) et les moyens (134) pour commander la première vanne (132)
du premier dispositif ventilo-convecteur (100a), dans lequel la première unité de commande primaire (140a) est agencée et
- l'unité de commande primaire (140b) du second dispositif ventilo-convecteur (100b) est configurée pour
• recevoir le second signal de commande (210b), et
• commander, à l'aide du second signal de commande (210b),
∘ le ventilateur (120),
∘ les moyens (134) pour commander la première vanne (132), ou
∘ le ventilateur (120) et les moyens (134) pour commander la première vanne (132)
du second dispositif ventilo-convecteur (100b), dans lequel la seconde unité de commande primaire (140b) est agencée.

13. Agencement selon la revendication 11 ou 12, dans lequel
(A)
- l'agencement comprend en outre un autre dispositif ventilo-convecteur (100c) selon l'une quelconque des revendications 1 à 12 ou
- le second dispositif ventilo-convecteur (100b) est l'autre dispositif ventilo-convecteur (100c), dans lequel
- l'unité de commande primaire (140c) de l'autre dispositif ventilo-convecteur (100c) est une autre unité de commande primaire (140c), dans lequel
(B)
- l'unité de commande secondaire (200) est configurée pour
• recevoir un signal de commande donné par l'utilisateur,
• former un premier signal de commande (210a) à l'aide du signal de commande donné par l'utilisateur, et
• envoyer le premier signal de commande (210a) à la première unité de commande primaire (140a),
- la première unité de commande primaire (140a) est configurée pour
• recevoir le premier signal de commande (210a) depuis l'unité de commande secondaire (200),
• former un autre signal de commande (210c, 210b) à l'aide du premier signal de commande (210a), et
• envoyer l'autre signal de commande (210c, 210b) à l'autre unité de commande primaire (140b, 140c), et
- l'autre unité de commande primaire (140b, 140c) est configurée
• pour recevoir l'autre signal de commande (210b, 210c) et
• pour commander, à l'aide de l'autre signal de commande (210c, 210b),
∘ le ventilateur (120),
∘ les moyens (134) pour commander la première vanne (132), ou
∘ le ventilateur (120) et les moyens (134) pour commander la première vanne (132)
de l'autre dispositif ventilo-convecteur (100c, 100b), dans lequel l'autre unité de commande primaire (140b, 140c) est agencée.
